# EUROPÄISCHE PATENTSCHRIFT

(11) **EP 0 971 963 B1**
(45) Veröffentlichungstag und Bekanntmachung des Hinweises auf die Patenterteilung: **17.07.2002**
(21) Anmeldenummer: 98917075.8
(22) Anmeldetag: 25.03.1998
(51) Int. Cl.: C08F 10/02

(54) **PI-KOMPLEX-VERBINDUNGEN**
PI-COMPLEX COMPOUNDS
COMPOSES A COMPLEXE PI

(30) Priorität: 05.04.1997 DE 19714058
(43) Veröffentlichungstag der Anmeldung: 19.01.2000
(73) Patentinhaber: Bayer Aktiengesellschaft, 51368 Leverkusen (DE)
(72) Erfinder: OSTOJA STARZEWSKI, Karl-Heinz, Aleksander, D-61118 Bad Vilbel (DE); KELLY, Warren, Mark, Airdrie, Alberta T4A 2B3 (CA)
(86) Internationale Anmeldenummer: EP9801745
(87) Internationale Veröffentlichungsnummer: WO9845339

(56) Entgegenhaltungen:
- EP-A- 0 638 593
- DE-A- 4 420 456

## Beschreibung

Die vorliegende Erfindung bezieht sich auf Verbindungen, in denen ein Übergangsmetall mit zwei π-Systemen, und zwar insbesondere mit aromatischen π-Systemen (Metallocene) komplexiert ist und die beiden Systeme durch mindestens eine Brücke aus einem Donor und einem Akzeptor reversibel miteinander verbunden sind, wobei mindestens eines der Donor- bzw. Akzeptoratome Teil des jeweils zugehörigen π-Systems ist. Die zwischen dem Donoratom und dem Akzeptoratom entstehende koordinative Bindung erzeugt in der Donorgruppe eine positive (Teil)Ladung und in der Akzeptorgruppe eine negative (Teil)Ladung:

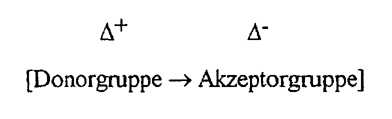

Die Erfindung bezieht sich weiterhin auf die Verwendung dieser neuen π-Komplex-Verbindungen und insbesondere neuer Metallocene als Polymerisationskatalysatoren.

Metallocene als π-Komplex-Verbindungen und ihr Einsatz als Katalysatoren bei der Polymerisation von Olefinen sind seit langem bekannt (EP-A 129 368 und die darin zitierte Literatur). Aus EP-A'368 ist weiterhin bekannt, daß Metallocene in Kombination mit Aluminiumalkyl/Wasser als Cokatalysatoren wirksame Systeme für die Polymerisation von Ethylen darstellen (so wird beispielsweise aus ca. 1 mol Trimethylaluminium und 1 mol Wasser Methylaluminoxan = MAO gebildet. Auch andere stöchiometrische Verhältnisse wurden schon mit Erfolg angewandt (WO 94/20506)). Es sind auch bereits Metallocene bekannt, deren Cyclopentadienylgerüste miteinander durch eine Brücke kovalent verknüpft sind. Als Beispiel für die zahlreichen Patente und Anmeldungen auf diesem Gebiet sei EP-A 704 461 erwähnt, worin die darin genannte Verknüpfungsgruppe eine (substituierte) Methylengruppe oder Ethylengruppe, eine Silylengruppe, eine substituierte Silylengruppe, eine substituierte Germylengruppe oder eine substituierte Phosphingruppe darstellt. Auch in EP '461 sind die verbrückten Metallocene als Polymerisationskatalysatoren für Olefine vorgesehen. Trotz der zahlreichen Patente und Anmeldungen auf diesem Gebiet besteht weiterhin der Wunsch nach verbesserten Katalysatoren, die sich durch hohe Aktivität auszeichnen, so daß die Menge des im Polymer verbleibenden Katalysators gering angesetzt werden kann, und die sich gleichermaßen fiir die Polymerisation und Copolymerisation von Olefinen zu Thermoplasten und zu elastomeren Produkten wie auch für die Polymerisation und Copolymerisation von Diolefinen, gegebenenfalls mit Olefinen, eignen.

DE-A1-44 20 456 beschreibt eine zwitterionische Übergangsmetallverbindung, bei der eine anionische Metallgruppe mit einem perhalogenierten Kohlenwasserstoffrest wie eine Tris(pentafluorophenyl)borategruppe über ein Heteroatom oder/oder eine Kohlenwasserstoffgruppe mit einem kationischen Übergangsmetall verbunden ist. Die Übergangsmetallverbindung wird zur Olefinpolymerisation verwendet. Die vorliegende Erfindung unterschiedet sich dadurch, dass sie Donor-Akzeptor verbrückte pi-Systeme der angegebenen Formeln betrifft, bei denen die jeweiligen pi-Systeme ein Donor- oder Akzeptoratom (D,A) als Substituent oder Teil davon aufweisen, wobei mindestens eines von D und A Teil des jeweils zugehörigen pi-Systems ist.

EP-A1-0 638 583 beschreibt die Verwendung von Heterocyclopentadienyl-Übergangsmetallverbindungen wie Phospholyl- oder Pyrrolylverbindungen von Übergangsmetallen als Katalysatorkomponente für die Polymerisation von Olefinen. Die Katalysatorkomponente wird zur Aktivierung mit einer Verbindung eines voluminösen im wesentlichen nicht-koordinierten Anions umgesetzt, wobei eine ionische Struktur entsteht. Im Gegensatz hierzu ist in der vorliegenden Erfindung der Elektronakzeptor Teil oder Substituent des pi-Systems und kann somit eine intramolekulare reversible Donor-/Akzeptorbrücke ausbilden.

Es wurde nun gefunden, daß sich besonders vorteilhafte Katalysatoren aus verbrückten π-Komplex-Verbindungen und insbesondere von Metallocen-Verbindungen herstellen lassen, bei denen die Verbrückung der beiden π-Systeme durch eine, zwei oder drei reversible Donor-Akzeptor-Bindungen hergestellt wird, in denen jeweils zwischen dem Donoratom und dem Akzeptoratom eine koordinative oder sogenannte dative Bindung entsteht, der zumindest formal eine ionische Bindung überlagert ist und bei denen mindestens eines der Donor- bzw. Akzeptoratome Teil des jeweils zugehörigen π-Systems ist. Die Reversibilität der Donor-Akzeptor-Bindung läßt neben dem durch den Pfeil zwischen D und A gekennzeichneten verbrückten Zustand auch den unverbrückten Zustand zu, in welchem die beiden π-Systeme infolge der ihnen innewohnenden Rotationsenergie sich beispielsweise um 360 Winkelgrade gegeneinander drehen können, ohne daß die Integrität des Metall-Komplexes aufgegeben wird. Nach vollendeter Drehung "schnappt" die Donor-Akzeptor-Bindung wieder ein. Beim Vorliegen mehrerer Donoren und/oder Akzeptoren kann ein solches "Einschnappen" bereits nach Durchlaufen von weniger als 360 Winkelgraden stattfinden. Erfindungsgemäße Metallocene lassen sich daher nur durch einen Doppelpfeil und die Formelteile (Ia) und (Ib) zur Umfassung beider Zustände darstellen.

Die Erfindung betrifft demnach π-Komplex-Verbindungen und insbesondere Metallocen-Verbindungen der Formel 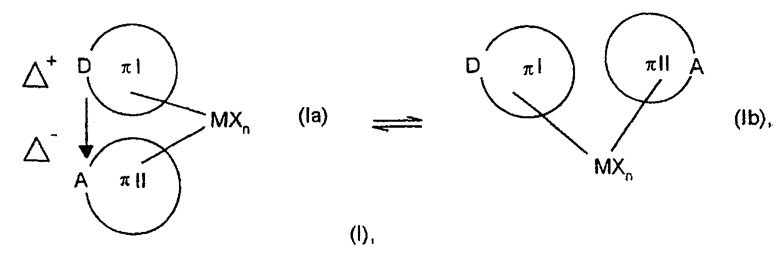 in der
- πI: und πII voneinander verschiedene geladene oder elektrisch neutrale π-Systeme darstellen, die ein- oder zweifach mit ungesättigten oder gesättigten Fünf- oder Sechsringen kondensiert sein können, und ausgewählt werden aus substituiertes und nicht substituiertes Ethylen, Allyl, Pentadienyl, Benzyl, Butadien, Benzol, das Cyclopentadienylanion und die sich durch Ersatz mindestens eines C-Atoms durch ein Heteroatom ergebenden Spezies,
- D: ein Donoratom bedeutet, das Substituent von πI oder Teil des π-Systems von πI ist und das in seinem jeweiligen Bindungszustand mindestens über ein freies Elektronenpaar verfügt,
- A: ein Akzeptoratom bedeutet, das Substituent von πII oder Teil des π-Systems von πII ist und das in seinem jeweiligen Bindungszustand eine Elektronenpaar-Lücke aufweist,
wobei D und A durch eine reversible koordinative Bindung derart verknüpft sind, daß die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierten Ringsystem eines oder mehrere D oder A oder D und A enthalten kann und
wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem C₁-C₂₀-Alkyl, das 1-fach bis vollständig durch Halogen, 1-3fach durch Phenyl sowie 1-3fach durch Vinyl substituiert sein kann, C₆-C₁₂-Aryl, Halogenaryl mit 6 bis 12 C-Atomen sowie einoder zweifach durch D und A substituiert sein können, sodaß die reversible koordinative D→A-Bindung (i) zwischen D und A, die beide Teile des jeweiligen π-Systems oder des ankondensierten Ringsystems sind, oder (ii) von denen D oder A Teil des π-Systems oder des ankondensierten Ringsystems und das jeweils andere Substituent des nicht kondensierten π-Systems oder des ankondensierten Ringsystems ist oder (iii) sowohl D als auch A solche Substituenten sind, wobei im Falle von (iii) mindestens ein zusätzliches D oder A oder beide Teile des π-Systems oder des ankondensierten Ringsystems ist (sind), ausgebildet wird,
- M: für ein Übergangsmetall der III., IV., V. oder VI. Nebengruppe des Periodensystems der Elemente (Mendelejew) einschließlich der Lanthaniden und Actiniden steht,
- X: ein Anionäquivalent bedeutet und
- n: in Abhängigkeit von den Ladungen von M sowie denen von π-I und π-II die Zahl Null, Eins, Zwei, Drei oder Vier bedeutet.

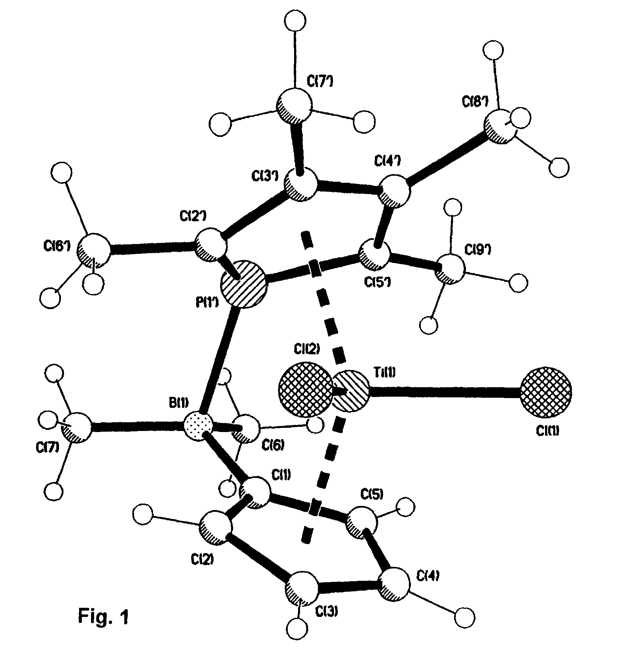

In Fig. 1 ist beispielhaft die Struktur von Dimethylboranyl-cyclopentadienyl-tetramethylphospholyl-titantetrachlorid dargestellt (vgl. Ausführungsbeispiele).

Erfindungsgemäße π-Systeme sind substituiertes und nicht substituiertes Ethylen, Allyl, Pentadienyl, Benzyl, Butadien, Benzol, das Cyclopentadienylanion und die sich durch Ersatz mindestens eines C-Atoms durch ein Heteroatom ergebenden Spezies. Unter den genannten Spezies sind die cyclischen bevorzugt. Die Art der Koordination solcher Liganden (π-Systeme) zum Metall kann vom σ-Typ oder vom π-Typ sein.

π-Komplex-Verbindungen der Formel (I), in denen die π-Systeme cyclisch und aromatisch sind (Metallocene), können beispielsweise so hergestellt werden, daß man entweder je eine Verbindung der Formeln (II) und (III) 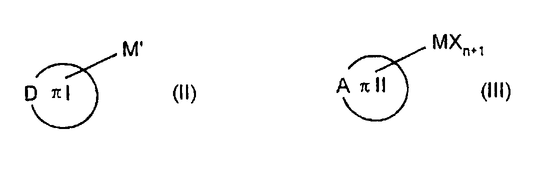 oder je eine Verbindung der Formeln (IV) und (V) 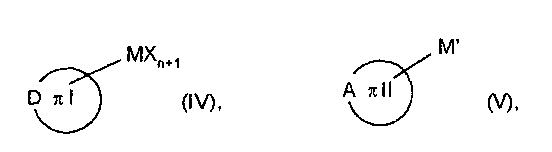 oder je eine Verbindung der Formeln (VI) und (VII) 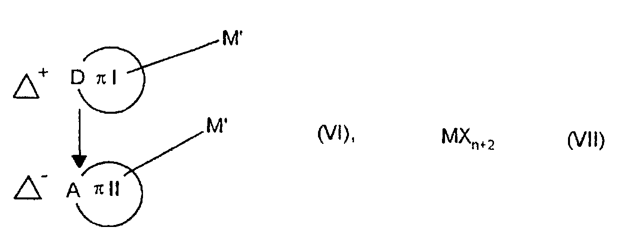 unter Austritt von M'X in Gegenwart oder Abwesenheit eines aprotischen Lösungsmittels oder je eine Verbindung der Formeln (VIII) und (III) 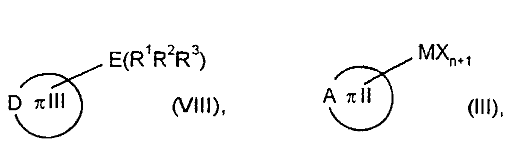 oder je eine Verbindung der Formeln (IV) und (IX) 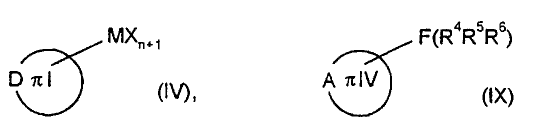 oder je eine Verbindung der Formeln (X) und (VII) 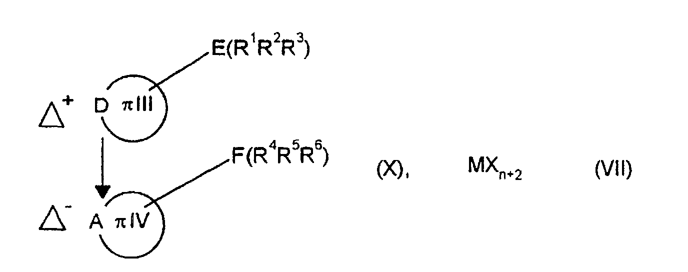 unter Austritt von E(R¹R²R³)X und F(R⁴R⁵R⁶)X in Abwesenheit oder in Gegenwart eines aprotischen Lösungsmittels miteinander umsetzt, wobei
πI, πII, D, A, M, X und n die obige Bedeutung haben,
πIII und πIV zwei verschiedene ungeladene π-Systeme mit einer πI bzw. πII entsprechenden Struktur darstellen,
M' ein Kationäquivalent eines (Erd)Alkalimetalls oder Tl bedeutet,
E und F unabhängig voneinander eines der Elemente Si, Ge oder Sn bedeuten und
R¹, R², R³, R⁴, R⁵ und R⁶ unabhängig voneinander für geradkettiges oder verzweigtes C₁-C₂₀-Alkyl, C₆-C₁₂-Aryl, sowie C₁-C₆-Alkyl-C₆-C₁₂-Aryl und C₆-C₁₂-Aryl-C₁-C₆-Alkyl, Vinyl, Allyl oder Halogen stehen,
wobei weiterhin in den Formeln (VIII), (IX), (X) anstelle von E(R¹R²R³) und F(R⁴R⁵R⁶) Wasserstoff stehen kann, X auch für ein Amidanion vom Typ R₂N^{θ} oder ein Carbanion vom Typ R₃C^{θ} oder ein Alkoholat-Anion vom Typ RO^{θ} stehen kann, und wobei es weiterhin möglich ist, Verbindungen der Formeln (II) oder (VIII) in Gegenwart von Verbindungen der Formeln (V) oder (IX) direkt mit einer Übergangsmetall-Verbindung der Formel (VII) umzusetzen. Zwei Anionen X können ferner, gegebenenfalls unter Zwischenschaltung einer ein- oder mehratomigen Brücke, zu einem Dianion verbunden sein.

Bei der Reaktion von (VIII) mit (III) bzw. (IV) mit (IX) bzw. (X) mit (VII) bildet sich bei der zuletzt genannten Variante die Struktur (I) unter Austritt von Amin R₂NH bzw. R₂NE(R¹R²R³) bzw. R₂NF(R⁴R⁵R⁶) oder einer Kohlenwasserstoffverbindung der Formel R₃CH bzw. R₃CE(R¹R²R³) bzw. R₃CF(R⁴R⁵R⁶) oder eines Ethers ROE(R¹R²R³) bzw. ROF(R⁴R⁵R⁶), worin die organischen Reste R gleich oder verschieden und unabhängig voneinander C₁-C₂₀-Alkyl, C₆-C₁₂-Aryl, substituiertes oder unsubstituiertes Allyl, Benzyl oder Wasserstoff sind. Beispiele für austretendes Amin oder Ether oder Kohlenwasserstoff oder Silane, Stannane, Germane sind etwa Dimethylamin, Diethylamin, Di-(n-propyl)-amin, Di-(isopropyl)-amin, Di-(tertiärbutyl)-amin, Tertiärbutylamin, Cyclohexylamin, Anilin, Methyl-phenyl-amin, Di-(allyl)-amin bzw. Methan, Toluol, Xylol, Trimethylsilylamin, Trimethylsilylether, Tetramethylsilan und ähnliches.

Es ist auch möglich, Verbindungen der Formeln (II) oder (VIII) in Gegenwart von Verbindungen der Formeln (V) oder (IX) direkt mit einer Übergangsmetall-Verbindung der Formel (VII) umzusetzen.

Die Herstellung offenkettiger π-Komplex-Verbindungen erfolgt nach den fachmännisch bekannten Verfahren unter Einbau von Donor- undAkzeptorgruppen.

Die Erfindung betrifft weiterhin die Verwendung der beschriebenen π-Komplex-Verbindungen in einem Verfahren zur Homo- oder Copolymerisation eines oder mehrerer Olefine, i-Olefine, Alkine oder Diolefine als Monomere oder zur ringöffnenden Polyaddition in der Gas-, Lösungs-, Masse-, Hochdruck- oder Slurry-Phase bei -60 bis +250°C, bevorzugt bis + 200°C und 0,5 bis 5000 bar, bevorzugt 1 bis 3 000 bar und in Gegenwart oder Abwesenheit von gesättigten oder aromatischen Kohlenwasserstoffen oder von gesättigten oder aromatischen Halogenkohlenwasserstoffen und in Gegenwart oder Abwesenheit von Wasserstoff, wobei diese π-Komplex-Verbindungen als Katalysatoren in einer Menge von 10¹ bis 10¹² mol aller Monomerer pro mol π-Komplex eingesetzt werden und wobei weiterhin in Gegenwart von Lewis-Säuren, Brönstedt-Säuren oder Pearson-Säuren oder zusätzlich in Gegenwart von Lewis-Basen gearbeitet werden kann.

Solche Lewis-Säuren sind beispielsweise Borane oder Alane, wie Aluminiumalkyle, Aluminiumhalogenide, Aluminiumalkoholate, Bororganyle, Borhalogenide, Borsäureester oder Bor- bzw. Aluminium-Verbindungen, die sowohl Halogenid- als auch Alkyl- bzw. Aryl- oder Alkoholat-Substituenten enthalten, sowie Mischungen davon oder das Triphenylmethyl-Kation. Besonders bevorzugt sind Aluminoxane oder Mischungen von Aluminium-haltigen Lewis-Säuren mit Wasser. Alle Säuren wirken nach heutigen Erkenntnissen als ionisierende Agentien, die ein Metalloceniumkation ausbilden, das durch ein sperriges, schlecht koordinierendes Anion ladungskompensiert wird.

Die Erfindung betrifft weiterhin die Reaktionsprodukte solcher ionisierender Agentien mit π-Komplexen der Formel (I). Sie lassen sich durch die Formel (XI) beschreiben 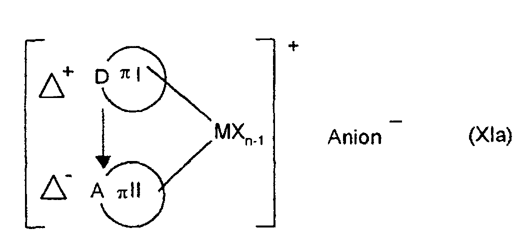 oder 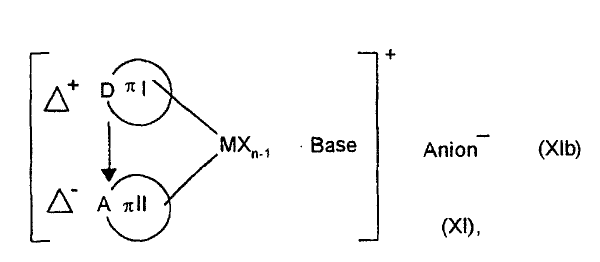 in der Anion für das gesamte sperrige, schlecht koordinierende Anion und Base für eine Lewis-Base stehen.

Die erfindungsgemäßen Metallocen-Verbindungen der Formel (I) können sowohl in monomerer, dimerer als auch in oligomerer Form vorliegen.

Beispiele für solche schlecht koordinierenden Anionen sind z.B.

B (C₆H₅)₄, B(C₆F₅)₄, B(CH₃)(C₆F₅)₃ , 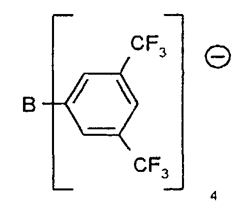 oder Sulfonate, wie Tosylat oder Triflat, Tetrafluorborate, Hexafluorphosphate oder - antimonate, Perchlorate, sowie voluminöse Cluster-Molekülanionen vom Typ der Carborane, beispielsweise C₂B₉H₁₂^{θ} oder CB₁₁H₁₂^{θ}. Beim Vorliegen solcher Anionen können π-Komplex-Verbindungen auch bei Abwesenheit von Aluminoxan als hochwirksame Polymerisationskatalysatoren wirken. Das ist vor allem dann der Fall, wenn ein X-Ligand eine Alkylgruppe oder Benzyl darstellt. Es kann aber auch vorteilhaft sein, solche π-Komplexe mit voluminösen Anionen in Kombination mit Aluminiumalkylen, wie (CH₃)₃Al, (C₂H₅)₃Al, (n-/i-Propyl)₃Al, (n-/t-Butyl)₃Al, (i-Butyl)₃Al, die isomeren Pentyl-, Hexyl- oder Octyl-Aluminiumalkyle, oder Lithiumalkylen, wie Methyl-Li, Benzyl-Li, Butyl-Li oder den entsprechenden Mg-organischen Verbindungen, wie Grignard-Verbindungen oder Zn-Organylen, einzusetzen. Solche Metallalkyle übertragen einerseits Alkylgruppen auf das Zentralmetall, andererseits fangen sie Wasser oder Katalysatorgifte aus dem Reaktionsmedium bzw. Monomer bei Polymerisationsreaktionen ab. Beispiele für Borverbindungen, von denen solche Anionen abgeleitet werden können, sind:
Triethylammonium-tetraphenylborat,
Tripropylammonium-tetraphenylborat,
Tri(n-butyl)ammonium-tetraphenylborat,
Tri(t-butyl)ammonium-tetraphenylborat,
N,N-Dimethylanilinium-tetraphenylborat,
N,N-Diethylanilinium-tetraphenylborat,
N,N-Dimethyl(2,4,6-trimethylanilinium)tetraphenylborat,
Trimethylammonium-tetrakis(pentafluorophenyl)borat,
Triethylammonium-tetrakis(pentafluorophenyl)borat,
Tripropylammonium-tetrakis(pentafluorophenyl)borat,
Tri(n-butyl)ammonium-tetrakis(pentafluorophenyl)borat,
Tri(sec-butyl)ammonium-tetrakis(pentafluorophenyl)borat,
N,N-Dimethylanilinium-tetrakis(pentafluorophenyl)borat,
N,N-Diethylanilinium-tetrakis(pentafluorophenyl)borat,
N,N-Dimethyl(2,4,5-trimethylanilinium)-tetrakis(pentafluorophenyl)borat,
Trimethylamminium-tetrakis(2,3,4,6-tetrafluorophenyl)borat,
Triethylammonium-tetrakis (2,3,4,6-tetrafluorophenyl)borat,
Tripropylammonium-tetrakis(2,3,4,6-tetrafluorophenyl)borat,
Tri(n-butyl)ammonium-tetrakis(2,3,4,6-tetrafluorophenyl)borat,
Dimethyl(t-butyl)ammonium-tetrakis(2,3,4,6-tetrafluorophenyl)borat,
N,N-Dimethylanilinium-tetrakis(2,3,4,6-tetrafluorophenyl)borat,
N,N-Diethylanilinium-tetrakis(2,3,4,6-tetrafluorophenyl)borat,
N,N-Dimethyl-(2,4,6-trimethylanilinium)-tetrakis-(2,3,4,6-tetrafluorophenyl)borat;
Dialkylammonium-Salze, wie:
   Di-(i-propyl)ammonium-tetrakis(pentafluorophenyl)borat und
   Dicyclohexylammonium-tetrakis(pentafluorophenyl)borat;
   Tri-substituierte Phosphonium-Salze, wie:
      Triphenylphosphonium-tetrakis(pentafluorophenyl)borat,
      Tri(o-tolyl)phosphonium-tetrakis(pentafluorophenyl)borat,
      Tri(2,6-dimethylphenyl)phosphonium-tetrakis(pentafluorophenyl)borat,
      Tritolylmethyl-tetrakis(pentafluorphenyl)borat,
      Triphenylmethyl-tetraphenylborat (Trityl-tetraphenylborat),
      Trityl-tetrakis(pentrafluorpheyl)borat,
      Silber-tetrafluorborat,
      Tris(pentafluorphenyl)boran,
      Tris(trifiuormethyl)boran.

Die erfindungsgemäßen π-Komplex-Verbindungen bzw. Metallocen-Verbindungen können isoliert als Reinstoffe zur (Co)Polymerisation eingesetzt werden. Es ist aber auch möglich, sie "in situ" im (Co)Polymerisationsreaktor in einer dem Fachmann bekannten Weise zu erzeugen und zu verwenden.

Die erfindungsgemäßen π-Komplex -Verbindungen sind gekennzeichnet durch das Vorliegen mindestens einer koordinativen Bindung zwischen Donoratom(en) D und Akzeptoratom(en) A. Sowohl D als auch A können hierbei Substituenten ihrer jeweils zugehörigen π-Systeme πI bzw. πII oder Teil des π-Systems sein, wobei jedoch stets mindestens eines von D und A Teil des π-Systems ist. Als π-System wird hierbei das gesamte, gegebenenfalls ein- oder zweifach kondensierte π-System verstanden. Hieraus ergeben sich folgende Ausführungsformen:
- D ist Teil des π-Systems, A ist Substituent des π-Systems;
- D ist Substituent des π-Systems, A ist Teil des π-Systems;
- D und A sind Teile ihres jeweiligen π-Systems.

Beispielsweise seien folgende heterocyclische Ringsysteme genannt, in denen D oder A Teile des Ringsystems sind:

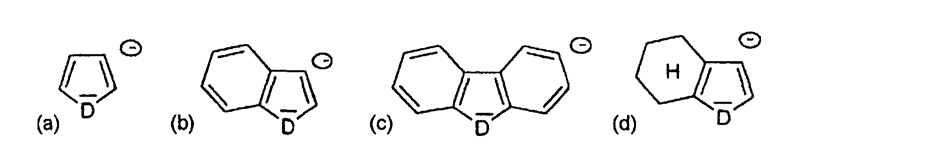

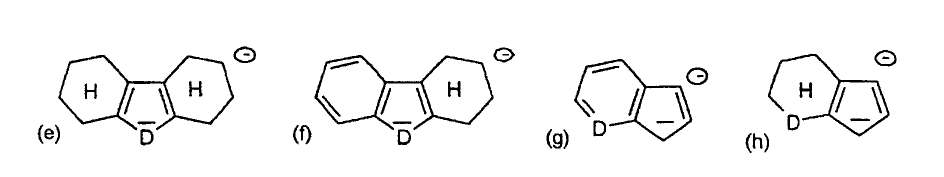

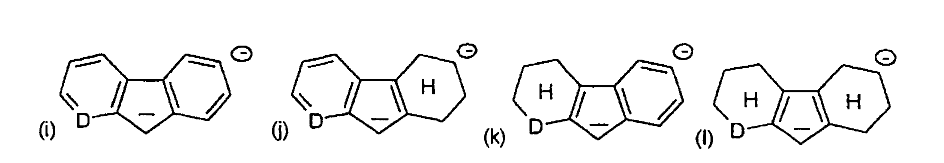

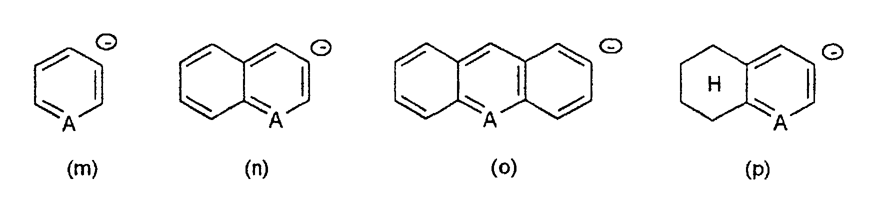

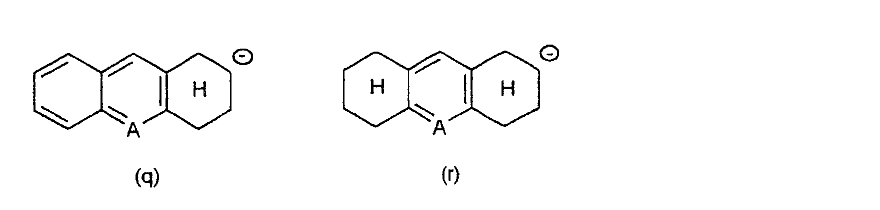

Wichtige heterocyclische Ringsysteme sind die mit (a), (b), (c), (d), (g), (m), (n) und (o) bezeichneten Systeme; besonders wichtige sind die mit (a), (b), (c) und (m) bezeichneten.

Für den Fall, daß eines von D und A Substituent seines zugehörigen Ringsystems ist, ist das Ringsystem 3-, 4-, 5-, 6-, 7- oder 8-gliedrig mit oder ohne elektrische Ladung, das in der angegebenen Weise weiter substituiert und/oder kondensiert sein kann. Bevorzugt sind 5- und 6-gliedrige Ringsysteme. Besonders bevorzugt ist das negativ geladene Cyclopentadienyl-System.

Das erste bzw. das zweite π-System πI und πII, falls es als Ringsystem ausgebildet ist, kann für den Fall, daß eines von D und A Substituent des Ringsystems ist, beispielsweise eines aus der Gruppe von Cyclopentadien, substituiertem Cyclopentadien, Inden, substituiertem Inden, Fluoren und substituiertem Fluoren sein. Substituenten können eines bis alle H-Atome des Ringsystems ersetzen. Diese Substituenten können C₁-C₂₀-Alkyl, wie Methyl, Ethyl, Propyl, Isopropyl, Butyl oder iso-Butyl, t-Butyl, Hexyl, Octyl, Decyl, Trimethylsilyl, Pentamethyldisilanyl, Trimethylsilyl-methyl, Dodecyl, Hexadecyl, Octadecyl, Eicosyl, C₆-C₁₂-Aryl, wie Phenyl, C₁-C₄-Alkylphenyl, wie Tolyl, Ethylphenyl, (i-)Propylphenyl, (i-,tert.-)Butylphenyl, Xylyl, Halogenaryl, wie Fluor-, Chlor-, Bromphenyl, Naphthyl oder Biphenylyl, Triorganyl-silyl, wie Trimethylsilyl (TMS), Ferrocenyl sowie D bzw. A, wie oben definiert, sein. Ankondensierte Ringe können sowohl ungesättigt, z.B. aromatisch, als auch teilweise oder vollständig hydriert sein, so daß lediglich die Doppelbindung bestehen bleibt, an der sowohl der ankondensierte Ring als auch der Cyclopentadienring Anteil haben. Weiterhin können Benzolringe, wie im Inden oder Fluoren, einen oder zwei ankondensierte weitere Benzolringe enthalten. Noch weiterhin können der Cyclopentadienylring und ein ankondensierter Benzolring gemeinsam einen weiteren Benzolring ankondensiert enthalten.

Cyclopentadiengerüste sind in Form ihrer Anionen ausgezeichnete Liganden für Übergangsmetalle, wobei jedes Cyclopentadienyl-Carbanion der genannten, gegebenenfalls substituierten Form eine positive Ladung des Zentralmetalls im Komplex kompensiert. Einzelbeispiele für solche Carbanionen sind: Cyclopentadienyl, Methyl-cyclopentadienyl, 1,2-Dimethyl-cyclopentadienyl, 1,3-Dimethyl-cyclopentadienyl, Indenyl, Phenylindenyl, 1,2-Diethyl-cyclopentadienyl, Tetramethyl-cyclopentadienyl, Ethyl-cyclopentadienyl, n-Butyl-cyclopentadienyl, n-Octyl-cyclopentadienyl, β-Phenylpropyl-cyclopentadienyl, Tetrahydroindenyl, Propyl-cyclopentadienyl, t-Butyl-cyclopentadienyl, Benzyl-cyclopentadienyl, Diphenylmethyl-cyclopentadienyl, Trimethylgermyl-cyclopentadienyl, Trimethylstannyl-cyclopentadienyl, Trifluormethyl-cyclopentadienyl, Trimethylsilyl-cyclopentadienyl, Pentamethylcyclopentadienyl, Fluorenyl, Tetrahydro- bzw. Octahydrofluorenyl, am Sechsring benzoanellierte Fluorenyle und Indenyle, N,N-dimethylaminocyclopentadienyl, Dimethylphosphino-cyclopentadienyl, Methoxy-cyclopentadienyl, Dimethylboranyl-cyclopentadienyl, (N,N-Dimethylaminomethyl)-cyclopentadienyl.

Neben der obligatorisch vorhandenen ersten Donor-Akzeptor-Bindung zwischen D und A können weitere Donor-Akzeptor-Bindungen gebildet werden, wenn zusätzliche D und/oder A als Substituenten oder Teile der jeweiligen π-Systeme vorliegen. Alle Donor-Akzeptor-Bindungen sind durch ihre oben dargestellte Reversibilität gekennzeichnet. D bzw. A können unabhängig voneinander am metallgebundenen π-System oder an einem ankondensierten Ring oder in einem ankondensierten Ring oder einem anderen Substituenten von πI bzw. πII sitzen. Für den Fall mehrerer D bzw. A können diese verschiedene der genannten Positionen einnehmen. Die Erfindung umfaßt demnach sowohl die verbrückten Molekül-Zustände (Ia) als auch die unverbrückten Zustände (Ib). Die Anzahl der D-Gruppen kann gleich oder verschieden zur Anzahl der A-Gruppen sein. In bevorzugter Weise liegt nur eine D/A-Brücke vor.

Neben den erfindungsgemäßen D/A-Brücken können auch kovalente Brücken vorliegen. In diesem Falle verstärken die D/A-Brücken die Stereorigidität und die Thermostabilität des Katalysators. Beim Wechsel zwischen geschlossener und geöffneter D/A-Bindung werden Sequenzpolymere mit höherer und niedrigerer Stereoregularität zugänglich. Solche Sequenzen können bei Copolymeren unterschiedliche chemische Zusammensetzungen haben.

Als Donorgruppen kommen vor allem solche in Frage, bei denen das Donoratom D ein Element der 5., 6. oder 7. Hauptgruppe des Periodensystems der Elemente (Mendelejew) ist und mindestens ein freies Elektronenpaar besitzt und wobei sich das Donoratom im Falle von Elementen der 5. Hauptgruppe in einem Bindungszustand mit Substituenten befindet und im Falle von Elementen der 6. Hauptgruppe in einem solchen befinden kann; Donoratome der 7. Hauptgruppe tragen keine Substituenten. Dies wird am Beispiel von Phosphor P, Sauerstoff O und Chlor Cl als Donoratome wie folgt verdeutlicht, wobei "Subst." solche genannten Substituenten und "-πI" die Bindung an das π-System darstellen, ein Strich mit einem Pfeil, die in Formel (I) angegebene Bedeutung einer koordinativen Bindung hat und sonstige Striche vorhandene Elektronenpaare bedeuten:

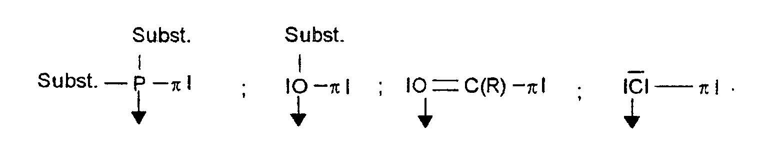

Als Akzeptorgruppen kommen vor allem solche in Frage, deren Akzeptoratom A ein Element aus der 3. Hauptgruppe des Periodensystems der Elemente (Mendelejew), wie Bor, Aluminium, Gallium, Indium und Thallium ist, sich in einem Bindungszustand mit Substituenten befindet und eine Elektronenlücke besitzt.

D und A sind durch eine koordinative Bindung, die auch als dative Bindung bezeichnet wird, verknüpft, wobei D eine positive (Teil)Ladung und A eine negative (Teil)Ladung annehmen.

Es wird demnach zwischen dem Donoratom D und der Donorgruppe bzw. zwischen dem Akzeptoratom A und der Akzeptorgruppe unterschieden. Die koordinative Bindung D → A wird zwischen dem Donoratom D und dem Akzeptoratom A hergestellt. Die Donorgruppe bedeutet die Einheit aus dem Donoratom D, den gegebenenfalls vorhandenen Substituenten und den vorhandenen Elektronenpaaren; entsprechend bedeutet die Akzeptorgruppe die Einheit aus dem Akzeptoratom A, den Substituenten und der vorhandenen Elektronenlücke.

Die Bindung zwischen dem Donoratom bzw. dem Akzeptoratom der D- bzw. A-Substituenten und dem Ringsystem kann durch Spacergruppen im Sinne von D-Spacer-πI bzw. A-Spacer-πII unterbrochen sein. Im dritten der obigen Formelbeispiele stellt =C(R)- einen solchen Spacer zwischen O und πI dar. Andere Spacergruppen sind beispielsweise:
Dimethylsilyl,
Diethylsilyl,
Di-n-propylsilyl,
Diisopropylsilyl,
Di-n-butylsilyl,
Di-t-butylsilyl,
Di-n-hexylsilyl,
Methylphenylsilyl,
Ethylmethylsilyl,
Diphenylsilyl,
Di (p-t-butylphenethylsilyl),
n-Hexylmethylsilyl,
Cyclopentamethylensilyl,
Cyclotetramethylensilyl,
Cyclotrimethylensilyl,
Dimethylgermanyl,
Diethylgermanyl,
Phenylamino,
t-Butylamino,
Methylamino,
t-Butylphosphino,
Ethylphosphino,
Phenylphosphino,
Methylen,
Dimethylmethylen (i-Propyliden),
Diethylmethylen,
Ethylen,
Dimethylethylen,
Diethylethylen,
Dipropylethylen,
Propylen,
Dimethylpropylen,
Diethylpropylen,
1,1-Dimethyl-3,3-dimethylpropylen,
Tetramethyldisiloxan,
1,1,4,4-Tetramethyldisilylethylen,
Diphenylmethylen.

In bevorzugter Weise sind D bzw. A ohne Spacer an das π-System gebunden.

D bzw. A können unabhängig voneinander am Cyclopentadien(yl)ring oder einem ankondensierten Benzolring oder einem anderen Substituenten von πI bzw. πII sitzen. Für den Fall mehrerer D bzw. A können diese verschiedene der genannten Positionen einnehmen.

Substituenten an den Donoratomen N, P, As, Sb, Bi, O, S, Se bzw. Te und den Akzeptoratomen B, Al, Ga, In bzw. Tl sind beispielsweise: C₁-C₁₂(Cyclo)Alkyl, wie Methyl, Ethyl, Propyl, i-Propyl, Cyclopropyl, Butyl, i-Butyl, tert.-Butyl, Cyclobutyl, Pentyl, Neopentyl, Cyclopentyl, Hexyl, Cyclohexyl, die isomeren Heptyle, Octyle, Nonyle, Decyle, Undecyle, Dodecyle; die hierzu korrespondierenden C₁-C₁₂-Alkoxy-Gruppen; Vinyl, Butenyl, Allyl; C₆-C₁₂-Aryl, wie Phenyl, Naphthyl oder Biphenylyl, Benzyl, die durch Halogen, 1 oder 2 C₁-C₄-Alkylgruppen, C₁-C₄-Alkoxygruppen, Sulfonat, Nitro oder Halogenalkylgruppen, C₁-C₆-Alkyl-carboxy, C₁-C₆-Alkyl-carbonyl oder Cyano substituiert sein können (z.B. Perfluorphenyl, m,m'-Bis(trifluormethyl)-phenyl, Tri(C₁-C₂₀-alkyl)silyl, Tri(C₆-C₁₂-aryl)silyl und analoge, dem Fachmann geläufige Substituenten); analoge Aryloxygruppen; Indenyl; Halogen, wie F, Cl, Br und I, 1-Thienyl, disubstituiertes Amino, wie (C₁-C₁₂-Alkyl)₂amino, Diphenylamino, Tris-(C₁-C₁₂-Alkyl)-silyl, NaSO₃-Aryl, wie NaSO₃-Phenyl und NaSO₃-Tolyl, C₆H₅-C≡C-; aliphatisches und aromatisches C₁-C₂₀-Silyl, dessen Alkylsubstituenten neben den oben genannten zusätzlich Octyl, Decyl, Dodecyl, Stearyl oder Eicosyl sein können und dessen Arylsubstituenten Phenyl, Tolyl, Xylyl, Naphthyl oder Biphenylyl sein können; und solche substituierten Silylgruppen, die über -CH₂- an das Donor- bzw. Akzeptoratom gebunden sind, beispielsweise (CH₃)₃SiCH₂-, (C ₁-C₁₂-Alkyl)(phenyl)amino, (C₁-C₁₂-Alkyl)(naphthyl)amino, (C₁-C₁₂-Alkylphenyl)₂amino, C₆-C₁₂-Aryloxy mit den oben genannten Arylgruppen, C₁-C₈-Perfluoralkyl, Perfluorphenyl. Bevorzugte Substituenten sind: C₁-C₆-Alkyl, C₅-C₆-Cycloalkyl, Phenyl, Tolyl, C₁-C₆-Alkoxy, C₆-C₁₂-Aryloxy, Vinyl, Allyl, Benzyl, Perfluorphenyl, F, Cl, Br, Di-(C₁-C₆alkyl)-amino, Diphenylamino.

Donorgruppen sind solche, bei denen das freie Elektronenpaar am N, P, As, Sb, Bi, O, S, Se, Te, F, Cl, Br, I lokalisiert ist; bevorzugt hiervon sind N, P, O, S. Beispielhaft als Donorgruppen seien genannt: (CH₃)₂N-, (C₂H₅)₂N-, (C₃H₇)₂N-, (C₄H₉)₂N-, (C₆H₅)₂N-, (CH₃)₂P-, (C₂H₅)₂P-, (C₃H₇)₂P-, (i-C₃H₇)₂P-, (C₄H₉)₂P-, (t-C₄H₉)₂P-, (Cyclohexyl)₂P-, (C ₆H₅)₂P-, (CH₃)(C₆H₅)P-, (CH₃O)₂P- (C₂H₅O)₂P-, (C₆H₅O)₂P-, (CH₃-C₆H₄-O)₂P-, ((CH₃)₂N)₂P-, Methyl enthaltende Phosphinogruppen CH₃O-, CH₃S-, C₆H₅S-, -C(C₆H₅)=O, -C(CH₃)=O, -OSi(CH₃)₃, -OSi(CH₃)₂-t-butyl, in denen N und P je ein freies Elektronpaar und O und S je zwei freie Elektronenpaare tragen und wobei in den beiden zuletzt genannten Beispielen der doppelt gebundene Sauerstoff über eine Spacergruppe gebunden ist, sowie Systeme, wie der Pyrrolidonring, wobei die verschiedenen Ringglieder ebenfalls als Spacer wirken.

Akzeptorgruppen sind solche, bei denen eine Elektronenpaar-Lücke am B, Al, Ga, In oder Tl, bevorzugt B, Al, Ga, In, besonders bevorzugt B, Al, Ga, vorhanden ist; beispielhaft seien genannt: (CH₃)₂B-, (C₂H₅)₂B-, H₂B-, (C₆H₅)₂B-, (CH₃)(C₆H₅)B-, (Vinyl)₂B-, (Benzyl)₂B-, Cl₂B-, (CH₃O)₂B-, Cl₂Al-, (CH₃)₂Al-, (i-C₄H₉)₂Al-, (Cl)(C₂H₅)Al-, (CH₃) ₂Ga-, (C₃H₇)₂Ga-, ((CH₃)₃Si-CH₂)₂Ga-, (Vinyl)₂Ga-, (C₆H₅)₂Ga-, (CH₃)₂In-, ((CH₃)₃Si-CH₂)₂In-, (Cyclopentadienyl)₂In-.

Weiterhin kommen solche Donor- und Akzeptor-Gruppen in Frage, die chirale Zentren enthalten. Weiterhin kommen Donor- und Akzeptorgruppen in Frage, in denen beide Substituenten gemeinsam mit dem D- bzw. A-Atom einen Ring bilden. Beispiele hierfür sind etwa

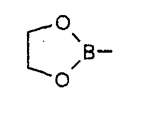

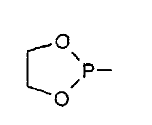

Erfindungsgemäß kann eines oder beide π-Systeme πI bzw. πII als Heterocyclen in Form der obigen Ringsysteme (a) bis (r) vorliegen. D ist hierbei bevorzugt ein Element der 5. oder 6. Hauptgruppe des Periodensystems der Elemente (Mendelejew); A ist hierbei bevorzugt Bor. Einzelbeispiele fiir solche Hetero-π-Systeme, insbesondere Heterocyclen sind: 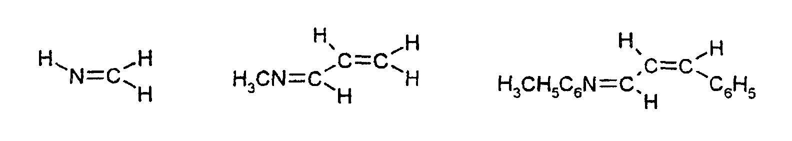 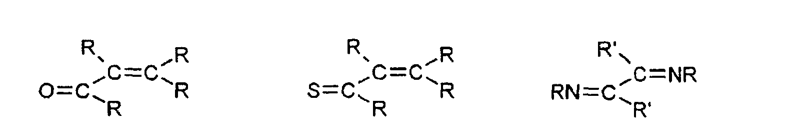
- R, R' =: H, Alkyl, Aryl, Alkaryl z.B. Methyl, Ethyl, t-Butyl, Phenyl, o,o'-Di-(i-Propyl)-phenyl

Beispiele für Heterocyclen sind: Pyrrolyl, Methylpyrrolyl, Dimethylpyrrolyl, Trimethylpyrrolyl, Tetramethylpyrrolyl, t-Butylpyrrolyl, Di-t-butylpyrrolyl, Indolyl, Methylindolyl, Dimethylindolyl, t-Butylindolyl, Di-t-butylindolyl, Tetramethylphospholyl, Tetraphenylphospholyl, Triphenylphospholyl, Trimethylphospholyl, Phosphaindenyl, Dibenzophospholyl (Phosphafluorenyl), Dibenzopyrrolyl.

Bevorzugte Donor-Akzeptor-Brücken zwischen πI und πII sind beispielsweise folgende: N → B, N → Al, P → B, P → Al, O → B, O → Al, Cl → B, Cl → Al, C=O→B, C=O→Al, wobei beide Atome dieser Donor-Akzeptor-Brücken Teile eines Heteroπ-Systems sein können oder ein Atom (Donor oder Akzeptor) Teil eines π-Systems ist und das andere Substituent des zweiten π-Systems ist oder wobei beide Atome Substituenten ihres jeweiligen Ringes sind und zusätzlich einer der Ringe ein Heteroatom enthält.

Die beiden Liganden-Systeme πI und πII können gernäß obiger Darstellung durch eine, zwei oder drei Donor-Akzeptor-Brücken verknüpft sein. Dies ist möglich, da erfindungsgemäß die Formel (Ia) die dargestellte D → A - Brücke enthält, die Liganden-Systeme πI bzw. πII aber weitere D und A als Substituenten oder Hetero-π-Zentren tragen können; die Zahl der sich daraus ergebenden zusätzlichen D → A - Brücken beträgt Null, Eins oder Zwei. Die Anzahl von D- bzw. A-Substituenten auf πI bzw. πII kann gleich oder verschieden sein. Die beiden Liganden-Systeme πI und πII können zusätzlich kovalent verbrückt sein. (Beispiele für kovalente Brücken sind weiter oben als Spacergruppen beschrieben.) Bevorzugt sind jedoch Verbindungen ohne kovalente Brücke, in denen demnach πI und πII über nur eine Donor-Akzeptor-Brücke verknüpft sind.

M steht für ein Übergangsmetall aus der 3., 4., 5. oder 6. Nebengruppe des Periodensystems der Elemente (Mendelejew), einschließlich der Lanthaniden und Actiniden; beispielhaft seien genannt: Sc, Y, La, Sm, Nd, Lu, Ti, Zr, Hf, Th, V Nb, Ta, Cr. Bevorzugt sind Ti, Zr, Hf, V, Nb und Ta.

Bei der Ausbildung der erfindungsgemäßen π-Komplex-Verbindungen, insbesondere mit Metallocen-Struktur wird je eine positive Ladung des Übergangsmetalls M durch je ein π-System, insbesondere durch je ein Cyclopentadienyl-haltiges Carbanion kompensiert.

Noch verbleibende positive Ladungen am Zentralatom M werden durch weitere, zumeist einwertige Anionen X abgesättigt, von denen zwei gleiche oder verschiedene auch miteinander verknüpft sein können 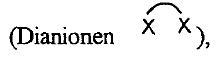 , beispielsweise einwertig oder zweiwertig negative Reste aus gleichen oder verschiedenen, linearen oder verzweigten, gesättigten oder ungesättigten Kohlenwasserstoffen, Aminen, Phosphinen, Thioalkoholen, Alkoholen oder Phenolen. Einfache Anionen wie CR₃⁻, NR₂⁻, PR₂⁻, OR⁻, SR⁻ usw. können durch gesättigte oder ungesättigte Kohlenwasserstoff- oder Silan-Brücken verbunden sein, sobei Dianionen entstehen und dieAnzahl der Brückenatome 0, 1, 2, 3, 4, 5, 6 betragen kann, bevorzugt sind 0 bis 4 Brückenatome, besonders bevorzugt 1 oder 2 Brückenatome. Die Brückenatome können außer H-Atomen noch weitere KW-Substituenten R tragen. Beispiele für Brücken zwischen den einfachen Anionen sind etwa -CH₂-, -CH₂CH₂-, -(CH₂)₃-, -CH=CH-, -(CH=CH)₂-, -CH=CH-CH₂-, -CH₂-CH=CH-CH₂-, -Si(CH₃)₂-, -C(CH₃)₂-. Beispiele fiir X sind Hydrid, Chlorid, Methyl, Ethyl, Phenyl, Allyl, Benzyl, Cyclopentadienyl, Fluorid, Bromid, Iodid, der n-Propylrest, der i-Propylrest, der n-Butylrest, der Amylrest, der i-Amylrest, der Hexylrest, der i-Butylrest, der Heptylrest, der Octylrest, der Nonylrest, der Decylrest, der Cetylrest, Methoxy, Ethoxy, Propoxy, Butoxy, Phenoxy, die S-analogen Thioalkoholate, Dimethylamino, Diethylamino, Methylethylamino, Di-t-Butylamino, Diphenylamino, Diphenylphosphino, Dicyclohexylphosphino, Dimethylphosphino, Methylen, Ethyliden, Propyliden, Butadiendiyl, das Ethylenglykoldianion. Beispiele für Dianionen sind 1,4-Diphenyl-1,3-butadiendiyl, 3-Methyl-1,3-pentadiendiyl, 1,4-Dibenzyl-1,3-butadiendiyl, 2,4-Hexadiendiyl, 1,3-Pentadiendiyl, 1,4-Ditolyl-1,3-butandiendiyl, 1,4-Bis(trimethylsilyl)-1,3-butadiendiyl, 1,3-Butadiendiyl. Weitere Beispiele für Dianionen sind solche mit

Heteroatomen, etwa der Struktur 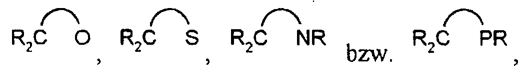 wobei die Brücke die angegebene Bedeutung hat. Besonders bevorzugt sind 1,4-Diphenyl-1,3-butandiendiyl, 1,3-Pentadiendiyl, 1,4-Dibenzyl-1,3-butadiendiyl, 2,4-Hexadiendiyl, 3-Methyl-1,3-pentadiendiyl, 1,4-Ditolyl-1,3-butadiendiyl und 1,4-Bis(trimethylsilyl)-1,3-butadiendiyl. Besonders bevorzugt sind darüber hinaus zur Ladungskompensation schwach oder nicht koordinierende Anionen der oben genannten Art.

Die Aktivierung durch solche voluminösen Anionen gelingt beispielsweise durch Umsetzung der D/A-π-Komplex-Verbindungen, insbesondere der D/A-Metallocene mit Tris-(pentafluorphenyl)-boran, Triphenylboran, Triphenylaluminium, Trityl-tetrakis-(pentafluorphenyl)-borat oder N,N-Dialkyl-phenyl-ammonium-tetrakis-(pentafluorphenyl)-borat oder den entsprechenden Phosphonium- oder Sulfoniumsalzen von Boraten oder (Erd)Alkali-, Thallium- oder Silbersalzen von Boraten, Carboranen, Tosylaten, Triflaten, Perfluorcarboxylaten, wie Trifluoracetat oder den korrespondierenden Säuren. Vorzugsweise werden dabei D/A-Metallocene eingesetzt, bei denen mindestens ein Anionäquivalent X = Alkyl-, Aryl- oder Benzylgruppen darstellt. Solche Derivate können auch "in situ" hergestellt werden, indem man D/A-π-Komplex-Verbindungen, insbesondere der D/A-Metallocene mit anderen Anionäquivalenten, wie X = F, Cl, Br, OR, NR₂ etc. zuvor mit Aluminiumalkylen, Lithiumorganylen, Mg-Grignard-Verbindungen oder Zink- oder Bleialkylen umsetzt. Die daraus erhältlichen Umsetzungsprodukte können ohne vorherige Isolierung mit obengenannten Boranen oder Boraten aktiviert werden.

Der Index n nimmt in Abhängigkeit von der Ladung von M den Wert Null, Eins, Zwei, Drei oder Vier, bevorzugt Null, Eins oder Zwei an. Die oben genannten Nebengruppenmetalle können nämlich, unter anderem abhängig von ihrer Zugehörigkeit zu den Nebengruppen, Wertigkeiten/Ladungen von Zwei bis Sechs, bevorzugt Zwei bis Vier annehmen, von denen durch die Carbanionen von Metallocen-Verbindung gewöhnlich zwei kompensiert werden. Im Falle von Ti³⁺ oder La³⁺ nimmt dann der Index n den Wert Eins und im Falle von Zr⁴⁺ den Wert zwei an; bei Ti²⁺ oder Sm²⁺ wird n = Null.

Im Verfahren zur Herstellung der π-Komplex-Verbindungen, insbesondere von Metallocen-Verbindungen der Formel (I) kann man entweder je eine Verbindung der obigen Formeln (II) und (III) oder je eine Verbindung der obigen Formeln (IV) und (V) oder je eine Verbindung der obigen Formeln (VI) und (VII) oder je eine Verbindung der obigen Formeln (VIII) und (III) oder je eine Verbindung der obigen Formeln (IV) und (IX) oder je eine Verbindung der obigen Formeln (X) und (VII) unter Austritt bzw. Abspaltung von Alkalimetall-X-, Erdalkalimetall-X₂-, Silyl-X-, Germyl-X-, Stannyl-Xoder HX-Verbindungen in einem aprotischen Lösungsmittel bei Temperaturen von -78°C bis +120°C, vorzugsweise von -40°C bis +70°C und in einem Molverhältnis von (II):(III) bzw. (IV):(V) bzw. (VI):(VII) bzw. (VIII):(III) bzw. (IV):(IX) bzw. (X):(VII) von 1:0,5-2, vorzugsweise 1:0,8-1,2, besonders bevorzugt 1:1, miteinander umzusetzen. In den Fällen der Umsetzung von (VIII) mit (III) bzw. (IV) mit (IX) bzw. (X) mit (VII) ist es möglich, auf ein aprotisches Lösungsmittel zu verzichten, wenn (VIII), (IX) oder (X) unter Reaktionsbedingungen flüssig ist. Beispiele für solche austretenden bzw. abgespaltenen Verbindungen sind: TlCl, LiCI, LiBr, LiF, LiI, NaCl, NaBr, KCl, KF, MgCl₂, MgBr₂, CaCl₂, CaF₂, Trimethylchlorsilan, Triethylchlorsilan, Tri-(n-butyl)-chlorsilan, Triphenylchlorsilan, Trimethylchlorgerman, Trimethylchlorstannan, Dimethylamin, Diethylamin, Dibutylamin und weitere Verbindungen, die aus dem oben genannten Substitutionsmuster für den Fachmann erkennbar sind.

Verbindungen der Formel (II) bzw. (IV) stellen somit bevorzugt aromatische Anionen mit einem Cyclopentadienylgerüst oder einem heterocyclischen Gerüst dar, die zur D/A-Brückenbildung genutzte 1 bis 3 Donorgruppen als Substituenten kovalent gebunden oder als heterocyclische Ringglieder inkorporiert enthalten, wobei erfindungsgemäß mindestens ein aromatisches Anion ein solches heterocyclisches Gerüst darstellt, und als Gegenion zur negativen Ladung des Cyclopentadienylgerüstes ein Kation aufweisen. Verbindungen der Formel (VIII) sind ungeladene cyclische Gerüste mit ebenfalls zur D/A-Brückenbindung genutzten 1 bis 3 Donorgruppen, aber mit leicht abspaltbaren Abgangsgruppen E(R¹R²R³), wie Silyl-, Germyl- oder Stannylgruppen oder Wasserstoff, an Stelle der ionischen Gruppen.

Die zweite Komponente zur Ausbildung von Metallocen-Verbindungen, nämlich die Verbindung der Formel (III) bzw. (V) stellt ebenfalls ein aromatisches Anion dar, das gleich dem cyclischen Gerüst der Verbindung (II) bzw. (IV) oder verschieden von ihm ist, jedoch 1 bis 3 zur D/A-Brückenbindung genutzte Akzeptorgruppen an Stelle der Donorgruppen trägt entweder als Substituenten oder als Heteroatom inkorporiert enthält. In entsprechender Weise sind Verbindungen der Formel (IX) ungeladene Gerüste mit 1 bis 3 zur D/A-Brückenbindung genutzten Akzeptorgruppen und ebenfalls leicht abspaltbaren Abgangsgruppen F(R⁴R⁵R⁶).

In völlig analoger Weise stellen Verbindungen der Formeln (VI) bzw. (X) Ausgangstoffe mit vorgebildeter D → A-Bindung dar, die Anionen-Gegenkationen-Verbindungen bzw. ungeladene Gerüste mit insgesamt möglichen 1 bis 3 D → A-Bindungen bedeuten und durch Reaktion mit Verbindungen der Formel (VII) Metallocen-Verbindungen (I) ergeben.

Beide Ausgangsstoffe des Herstellungsverfahrens, nämlich (II) und (III) bzw. (IV) und (V) bzw. (VI) und (VII) bzw. (VIII) und (III) bzw. (IV) und (IX) bzw. (X) und (VII) reagieren beim Zusammengeben spontan unter gleichzeitiger Ausbildung der Donor-Akzeptor-Gruppe -D → A- bzw. der Komplexierung des Metallkations M unter Austritt von M'X bzw. E(R¹R²R³)X bzw. F(R⁴R⁵R⁶)X bzw. HX. Bei der Darstellung der Donor-Akzeptor-Gruppe wurden die Substituenten an D und A der Übersichtlichkeit halber weggelassen.

M' ist ein Kationäquivalent eines (Erd)Alkalimetalls, wie Li, Na, K, ½ Mg, ½ Ca, ½ Sr, ½ Ba, oder Thallium.

Lösungsmittel für das Herstellverfahren sind aprotische, polare oder unpolare Lösungsmittel, wie aliphatische und aromatische Kohlenwasserstoffe oder aliphatische und aromatische Halogenkohlenwasserstoffe und Ether einschließlich zyklischer Ether. Im Prinzip kommen auch weitere aprotische Lösungsmittel, wie sie dem Fachmann bekannt sind, in Frage, jedoch sind wegen der einfacheren Aufarbeitung solche mit zu hohen Siedepunkten weniger bevorzugt. Typische Beispiele sind: n-Hexan, Cyclohexan, Pentan, Heptan, Petrolether, Toluol, Benzol, Chlorbenzol, Methylenchlorid, Diethylether, Tetrahydrofuran, Ethylenglykoldimethylether.

Die Ausgangsstoffe der Formeln (II), (III), (IV) und (V) für das Herstellungsverfahren können gemäß literaturbekannten Verfahren oder analog zu diesen hergestellt werden. So läßt sich beispielsweise analog zu J. of Organometallic Chem. (1971), 29, 227, das marktgängige Trimethylsilyl-cyclopentadien zunächst mit Butyl-lithium und dann mit Trimethylsilylchlorid zum Bis(trimethylsilyl)-cyclopentadien umsetzen. Dies wiederum kann mit Bortrichlorid zu Trimethylsilyl-cyclopentadienyl-dichlorboran umgesetzt werden (analog zu J. of Organometallic Chem. (1979), 169, 327), welches schließlich analog zu J. of Organometallic Chem. (1979), 169, 373 mit Titantetrachlorid zum Dichlorboryl-cyclopentadienyl-titantrichlorid umgesetzt werden kann. Diese zuletzt genannte Verbindung stellt bereits einen Prototyp der Verbindungen der Formel (III) dar; die zuletzt genannte Verbindung kann weiterhin selektiv mit Trimethylaluminium umgesetzt werden, wobei die beiden mit dem Boratom verbundenen Chloratome durch Methylgruppen ausgetauscht werden und wobei eine weitere Verbindung der Formel (III) aufgezeigt ist. Analog den Verfahrensbeschreibungen in J. Amer. Chem. Soc. (1983) 105, 3882 und Organometallics (1982) 1, 1591 kann das marktgängige Cyclopentadienyl-thallium mit Chlor-diphenylphosphin und weiter mit Butyl-lithium umgesetzt werden, wobei man einen Prototyp von Verbindungen der Formel (II) erhält.

Als ein weiteres Beispiel sei die Bildung von Dimethylstannyl-diphenylphosphin-inden durch Umsetzung von Inden zunächst mit Butyl-lithium, wie oben bereits genannt, und anschließend mit Chlordiphenylphosphin genannt; die weitere Umsetzung, zunächst erneut mit Butyl-lithium und dann mit Chlor-tributylzinn ergibt die genannte Verbindung, die nach weiterer Umsetzung mit Zirkontetrachlorid das Diphenylphosphino-indenyl-zirkoniumtrichlorid als einen Vertreter von Verbindungen der Formel (IV) gibt. Solche Synthesen und Herstellungsweisen sind dem auf dem Gebiet der metallorganischen und der elementorganischen Chemie tätigen Fachmann geläufig und in zahlreichen Literaturstellen veröffentlicht, von denen oben nur einige exemplarisch angeführt wurden.

Die weiter unten aufgeführten Beispiele zeigen, wie solche heterocyclischen Vorstufen bzw. erfindungsgemäßen Katalysatoren zugänglich sind. So kann Pyrrolyl-Lithium (Formel **II**) aus Pyrrol durch Umsetzung mit Butyl-Lithium hergestellt werden, wie etwa in J. Amer. Chem. Soc. (1982), 104, 2031 beschrieben. Trimethylstannylphosphol (Formel VIII) wird erhalten durch Umsetzung von 1-Phenylphosphol mit Lithium, gefolgt von Aluminiumtrichlorid, wobei Phospholyl-Lithium (Formel II) entsteht, welches seinerseits mit Trimethylchlorstannan zum Trimethylstannylphosphol weiterreagiert. Vgl.: J. Chem. Soc. Chem. Comm. (1988), 770. Diese Verbindung kann mit Titantetrachlorid zu Phospholyl-Titantrichlorid (Formel IV) umgesetzt werden.

Die erfindungsgemäßen π-Komplex-Verbindungen, insbesondere die Metallocen-Verbindungen eignen sich hervorragend als Katalysatoren in Verfahren zur Homound Copolymerisation von einem oder mehreren C₂-C₄₀-Olefinen oder zur Copolymerisation von einem oder mehreren C₂-C₄₀-Olefinen mit einem oder mehreren C₄-C₈-iso-Olefinen, C₂-C₈-Alkinen oder C₄-C₈-Diolefinen in der Gas-, Lösungs-, Masse-, Hochdruck- oder Slurry-Phase bei -60 bis +250°C und 0,5 bis 5.000 bar Druck, wobei in Gegenwart oder Abwesenheit von linearen und verzweigten, gesättigten oder aromatischen oder Alkyl-substituierten aromatischen C₄-C₂₀-Kohlenwasserstoffen oder von gesättigten oder aromatischen C₂-C₁₀-Halogenkohlenwasserstoffen gearbeitet werden kann. Solche Polymerisationen können diskontinuierlich oder bevorzugt kontinuierlich durchgeführt werden. Pro Mol Metallocen-Verbindungen werden 10¹ bis 10¹² Mol (Co)Monomere umgesetzt. Die erfindungsgemäßen π-Komplex-Verbindungen, insbesondere die Metallocen-Verbindungen können zusammen mit Cokatalysatoren eingesetzt werden. Das Mengenverhältnis zwischen π-Komplex-Verbindung und Cokatalysator beträgt 1 bis 100.000 mol Cokatalysator pro mol π-Komplex. Cokatalysatoren sind beispielsweise Aluminoxanverbindungen. Darunter werden solche der Formel 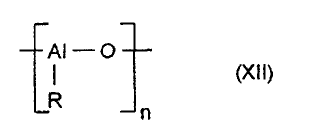 verstanden, in der
- R: für C₁-C₂₀-Alkyl, C₆-C₁₂-Aryl oder Benzyl steht und
- n: eine Zahl von 2 bis 50, bevorzugt 10 bis 35 bedeutet.

Es ist ebenso möglich, ein Gemisch verschiedener Aluminoxane oder ein Gemisch von deren Vorläufern (Aluminiumalkylen oder Alkylaluminiumhalogeniden) in Kombination mit Wasser (in gasförmiger, flüssiger, fester oder gebundener Form, etwa als Kristallwasser) einzusetzen. Das Wasser kann auch als (Rest)feuchte des Polymerisations-Mediums, des Monomers oder eines Trägers wie Silikagel zugeführt werden.

Die aus der eckigen Klammer von Formel (XII) herausragenden Bindungen enthalten als Endgruppen des oligomeren Aluminoxans R-Gruppen oder AlR₂-Gruppen. Solche Aluminoxane liegen in der Regel als Gemisch mehrerer von ihnen mit unterschiedlicher Kettenlänge vor. Die Feinuntersuchung hat auch Aluminoxane mit ringförmiger oder käfigartiger Struktur ergeben. Solche sind bevorzugt. Aluminoxane sind marktgängige Verbindungen. Im speziellen Fall von R = CH₃ wird von Methylaluminoxanen (MAO) gesprochen.

Weitere Cokatalysatoren sind Aluminiumalkyle, Lithiumalkyle oder Mg-organische Verbindungen, wie Grignard-Verbindungen oder teilhydrolysierte Bororganyle. Bevorzugte Cokatalysatoren sind Aluminoxane.

Die Aktivierung mit dem Cokatalysator bzw. die Erzeugung des voluminösen nichtoder schwach-koordinierenden Anions kann in dem Autoklaven oder in einem getrennten Reaktionsgefäß (Präformierung) durchgeführt werden. Die Aktivierung kann in Gegenwart oder Abwesenheit des/der zu polymerisierenden Monomeren erfolgen. Die Aktivierung kann in einem aliphatischen oder aromatischen oder halogenierten Lösungs- oder Suspensionsmittel oder auf der Oberfläche eines Katalysator-Trägermaterials durchgeführt werden.

Die π-Komplex-Verbindungen und die Cokatalysatoren können sowohl als solche in homogener oder heterogener Form als auch einzeln oder gemeinsam in heterogener Form auf Trägern eingesetzt werden. Das Trägermaterial kann hierbei anorganischer oder organischer Natur sein, wie Kieselgel, Al₂O₃, MgCl₂, Cellulosederivate, Stärke und Polymere. Hierbei kann sowohl erst die π-Komplex-Verbindung als auch erst der Cokatalysator, wie z.B. das Aluminoxan und/oder Aluminiumalkyl auf den Träger gebracht werden und die jeweils andere(n) Komponente(n) danach zugesetzt werden. Gleichermaßen kann man aber auch die π-Komplex-Verbindung in homogener oder heterogener Form mit dem Cokatalysator aktivieren und danach die aktivierte π-Komplex-Verbindung auf den Träger bringen.

Trägermaterialien werden vorzugsweise thermisch und/oder chemisch vorbehandelt um den Wassergehalt bzw. die OH-Gruppenkonzentration definiert einzustellen oder möglichst niedrig zu halten. Eine chemische Vorbehandlung kann z.B. in der Umsetzung des Trägers mit Aluminiumalkyl bestehen. Anorganische Träger werden gewöhnlich vor Verwendung auf 100°C bis 1000°C während 1 bis 100 Stunden erhitzt. Die Oberfläche solcher anorganischer Träger, insbesondere von Silica (SiO₂), liegt zwischen 10 und 1000 m²/g, vorzugsweise zwischen 100 und 800 m²/g. Der Teilchendurchmesser liegt zwischen 0,1 und 500 Mikrometer (µ), vorzugsweise zwischen 10 und 200 µ.

Durch Homo- oder Copolymerisation umzusetzende Olefine, i-Olefine, Alkine und Diolefine sind beispielsweise Ethylen, Propylen, Buten-1, i-Buten, Penten-1, Hexen-1, Octen-1, 3-Methyl-buten-1, 4-Methyl-penten-1-, 4-Methyl-hexen-1, 1,3-Butadien, Isopren, 4-Methyl-1,3-pentadien, 1,4-Hexadien, 1,5-Hexadien und 1,6-Octadien, Chloropren, Acetylen, Methylacetylen. Mit α,ω-Diolefinen kann weiterhin eine cyclisierende Polymerisation durchgeführt werden, bei der beispielsweise aus 1,5-Hexadien Poly-(methylen-1,3-cyclopentan) gebildet wird:

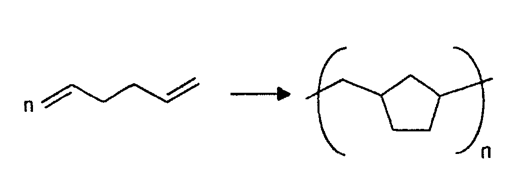

Benutzt man hierbei Trialkylsilyl-substituierte α,ω-Diolefine, kann nachträglich durch polymeranaloge Umsetzung eine funktionelle Gruppe eingeführt werden. Solche Olefine und Diolefine können weiterhin substituiert sein, beispielsweise mit Phenyl, substituiertem Phenyl, Halogen, der veresterten Carboxylgruppe, der Säureanhydridgruppe; Verbindungen dieser Art sind beispielsweise Styrol, o-, m- und p-Methylstyrol, 2,4-, 2,5-, 3,4- und 3,5-Dimethylstyrol, m- und p-Ethylstyrol, p-tert.-Butylstyrol, m- und p-Divinylbenzol, Trivinylbenzol, o-, m- und p-Chlorstyrol, o-, mund p-Bromstyrol, o-, m- und p-Fluorstyrol, o-Methyl-p-fluorstyrol, o-, m- und p-Methoxystyrol, o-, m- und p-Ethoxystyrol, Inden, 4-Vinyl-biphenyl, Vinyl-fluoren, Vinyl-anthracen, Methylmethacrylat, Ethylacrylat, Vinylsilan, Trimethylallylsilan, Vinylchlorid, Vinylidenchlorid, Tetrafluorethylen, Isobutylen, Vinylcarbazol, Vinylpyrrolidon, Acrylnitril, Vinylether und Vinylester. Weiterhin sind erfindungsgemäß ringöffnende Polyadditionen, etwa von Lactonen, wie ε-Caprolacton oder δ-Valerolacton, oder von Lactamen, wie ε-Caprolactam, möglich. Bevorzugte Monomere sind: Ethylen, Propylen, Buten, Hexen, Octen, 1,3-Butadien, Isopren, 1,5-Hexadien, 1,6-Octadien, Styrol und die genannten p-substituierten Styrole, Methylmethacrylat, ε-Caprolacton, ω-Valerolacton und Acetylen. Bevorzugte Copolymere entstehen aus den Monomersystemen; Ethylen/Styrol, Ethylen/Butadien, Butadien/Styrol, Isopren/Styrol, 4-Methyl-1,3-pentadien/Styrol, Styrol/substituiertes Styrol, Maleinimid/Styrol und Acrylnitril/Styrol. Von großer Wichtigkeit ist die Möglichkeit, hoch syndiotaktische Polystyrole herzustellen. Sie haben eine solche Syndiotaktizität, daß der Anteil von racemischen Diaden mindestens 75 %, bevorzugt mindestens 85 % beträgt; der Anteil an racemischem Pentaden beträgt mindestens 30 %, bevorzugt mindestens 50 %. Von weiterer Wichtigkeit ist die Möglichkeit, reine Poly-(1,3-diene) herzustellen, insbesondere solche mit einer hohen 1,3-cis-Verknüpfung. Weiterhin wichtige Poly-(1,3-diene) sind solche mit 1,2-Verknüpfung, die demnach ungesättigte Seitenketten ergeben.

Es ist möglich, die genannten (Co)Polymerisationen in Gegenwart von Wasserstoff, etwa zur Molmassen-Einstellung oder zur Aktivitätssteigerung, durchzuführen.

Die mit den erfindungsgemäßen π-Komplex-Verbindungen, insbesondere mit Metallocen-Verbindungen durchzuführenden Homo- oder Copolymerisationen oder Polyadditionen werden im Bereich von -60 bis +250°C, bevorzugt 50 bis 200°C, und 0,5 bis 5.000 bar, bevorzugt 1 bis 3000 bar, adiabatisch oder isotherm durchgeführt. Es handelt sich dabei um Hochdruckverfahren in Autoklaven oder Rohrreaktoren, um Lösungsverfahren als auch um Polymerisation in Masse, um Verfahren in der Slurry-Phase in Rührreaktoren oder Schlaufenreaktoren sowie um Verfahren in der Gas-Phase, wobei die Drücke für die Slurry-, Lösungs- und Gas-Phase nicht über 65 bar hinausgehen. Solche Polymerisationen können auch in Gegenwart von Wasserstoff durchgeführt werden. Alle diese Verfahren sind lange bekannt und dem Fachmann geläufig. Es ist nun ein Vorteil der erfindungsgemäßen π-Komplex-Verbindungen, daß sie durch Auswahl der Substituenten sowohl als lösliche, gegebenenfalls auf Trägern aufgebrachte, als auch als unlösliche π-Komplex-Verbindungen herstellbar sind. Lösliche π-Komplex-Verbindungen wird man für das Hochdruck-Verfahren und das Lösungsverfahren einsetzen; heterogene π-Komplex-Verbindungen wird man z.B. in der Gas-Phase einsetzen.

Die erfindungsgemäßen π-Komplex-Verbindungen ermöglichen durch die Donor-Akzeptor-Brücke eine definierte Öffnung der beiden Cyclopentadienylgerüste in der Art eines Schnabels, wobei neben einer hohen Aktivität eine hohe Stereoselektivität, eine kontrollierte Molekulargewichtsverteilung und ein einheitlicher Einbau von Comonomeren gewährleistet sind. Infolge einer definierten schnabelartigen Öffnung ist auch Platz für voluminöse Comonomere. Eine hohe Einheitlichkeit in der Molekulargewichtsverteilung ergibt sich weiterhin aus dem einheitlichen und definierten Ort der durch Einschub (Insertion) erfolgenden Polymerisation (Single Site Catalyst).

Die D/A-Struktur kann eine Extra-Stabilisierung der Katalysatoren bis hin zu hohen Temperaturen bewirken, so daß die Katalysatoren auch im Hochtemperaturbereich von 80 bis 250°C, bevorzugt 80 bis 180°C eingesetzt werden können. Die mögliche thermische Dissoziation der Donor-Akzeptor-Bindung ist reversibel und führt durch diesen Selbstorganisations-Prozeß und Selbstreparatur-Mechanismus zu besonders hochwertigen Katalysatoreigenschaften. Die thermische Dissoziation ermöglicht z.B. eine gezielte Verbreiterung der Molekulargewichts-Verteilung, wodurch die Polymere besser verarbeitbar werden. Dieser Effekt kommt z.B. auch bei solchen Katalysatoren zum Tragen, bei denen πI und πII durch je eine kovalente und eine D/A-Brücke verknüpft sind. Die erfindungsgemäßen D/A-π-Strukturen ermöglichen z.B. auch ein mit klassischen Katalysatoren nicht erreichtes Ausmaß an defektfreier Polyethylenbildung. Entsprechend können die Ethen-Polymerisate außerordentlich hohe Schmelztemperaturen beispielsweise oberhalb von 135°C bis 160°C (Maximum der DSC-Kurve) aufweisen. Unter diesen linearen Polyethylenen sind solche, die direkt im Polymerisationsprozeß anfallen und Schmelztemperaturen von 140 bis 160°C (Maxima der DSC-Kurven), bevorzugt 142 bis 160°C, besonders bevorzugt 144 bis 160°C aufweisen, besonders wichtig. Dies gilt insbesondere fiir die, die mit den beanspruchten π-Komplex-Verbindungen herstellbar sind. Solche neuen hochschmelzenden Polyethylene zeigen gegebenüber den bekannten beispielsweise verbesserte mechanische Eigenschaften und Wärmeformbeständigkeit (Sterilisierbarkeit bei medizinischen Anwendungen) und eröffnen dadurch Anwendungsmöglichkeiten, die bisher für Polyethylen nicht möglich erschienen und beispielsweise bisher nur durch hochtaktisches Polypropylen erfüllbar waren. Weitere Merkmale sind hohe Schmelzenthalpien und hohe PE-Molmassen.

In einem weiten Temperaturbereich wird durch Polymerisations-Temperaturerhöhung zwar die PE-Molmasse erniedrigt, jedoch ohne nennenswerte Aktivitätsminderung und ohne daß insgesamt der Bereich technisch interessanter hoher PE-Molmassen und hoher PE-Schmelztemperaturen verlassen wird.

Es wurde weiterhin beobachtet, daß erfindungsgemäße π-Komplex-Verbindungen geeigneter Symmetrie an geeigneten Monomeren eine regiospezifische (isotaktische, syndiotaktische) Polymerisation bewirken, jedoch im oberen Teil des genannten Temperaturbereichs am gleichen Monomer eine zunehmend unspezifische (ataktische) Verknüpfung der Monomereinheiten auslösen. Diese Erscheinung ist noch nicht vollständig untersucht, könnte jedoch in Übereinstimmung mit der Beobachtung stehen, daß koordinative Bindungen, die von einer ionischen Bindung überlagert sind, wie die Donor-Akzeptor-Bindungen in den erfindungsgemäßen π-Komplex-Verbindungen, eine zunehmende Reversibilität bei höherer Temperatur zeigen. So wurde beispielsweise bei der Ethylen-Propylen-Copolymerisation beobachtet, daß bei gleichem Angebot beider Comonomerer bei tiefer Copolymerisationstemperatur ein hoch Propylen-haltiges Copolymer gebildet wird, während mit steigender Polymerisationstemperatur der Propylengehalt zurückgeht, bis schließlich bei hoher Temperatur überwiegend Ethylen enthaltende Polymere entstehen. Die reversible Dissoziation und Assoziation der D/A-Struktur und die dadurch möglich werdende gegeneinander erfolgende Rotation der π-Systeme kann schematisch wie folgt dargestellt werden:

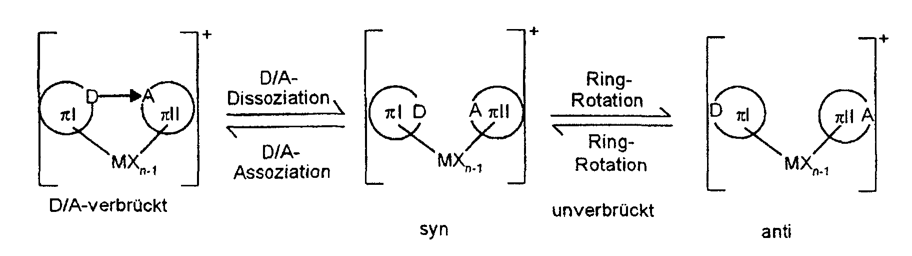

Durch den Wechsel zwischen verbrückter und unverbrückter Katalysator-Struktur stehen erstmals Katalysatoren zur Verfügung, die geeignet sind, unter wechselnden Bedingungen definiert wechselnde stereospezifische/aspezifische Liganden-Anordnungen unter Benutzung nur eines Katalysators zu erzeugen.

Das temperaturabhängige dynamische Verhalten der erfindungsgemäßen π-Komplex-Verbindungen bzw. Metallocen-Verbindungen bei verschiedenen Temperaturen ermöglicht es demnach, bei verschiedenen Temperaturen unterschiedliche Stereoblock-Copolymerisate herzustellen, etwa solche des Typs von isotaktischem und ataktischem Polypropylen (i-PP-a-PP)ₙ, die von unterschiedlicher Zusammensetzung (a) bezüglich der relativen Mengen von isotaktischem Polypropylen (i-PP) und ataktischem Polypropylen (a-PP) und (b) bezüglich der Block- bzw. Sequenzlängen sein können.

Eine weitere wertvolle Eigenschaft der erfindungsgemäßen D/A-π-Komplex-Verbindungen besteht in der Möglichkeit zur Selbstaktivierung und damit einem Verzicht auf teure Cokatalysatoren, insbesondere im Falle von dianionischen 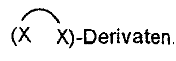 Hierbei bindet das Akzeptoratom A in der geöffneten Form der D/A-π-Komplex-Verbindung einen X-Liganden, beispielsweise eine Seite eines Dianions, unter Ausbildung einer zwitterionischen π-Komplex-Struktur und erzeugt damit beim Übergangsmetall eine positive Ladung, während das Akzeptoratom A eine negative Ladung annimmt. Eine solche Selbstaktivierung kann intramolekular oder intermolekular erfolgen. Dies sei am Beispiel der bevorzugten Verknüpfung zweier X-Liganden zu einem Chelat-Liganden, nämlich des Butadiendiyl-Derivates, verdeutlicht:

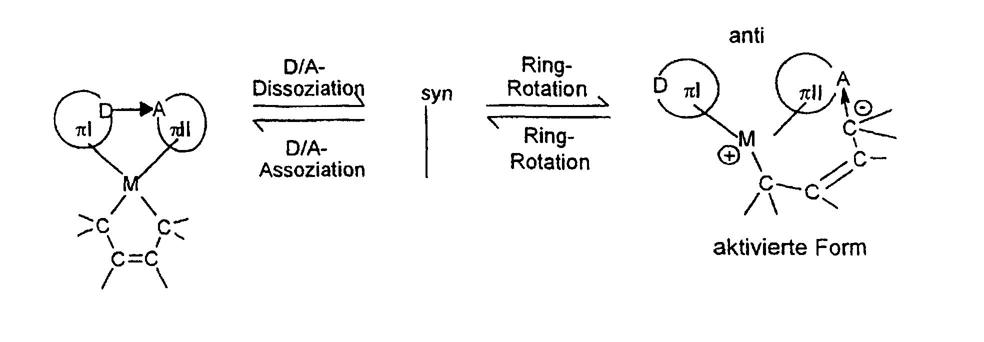

Die Bindungsstelle zwischen dem Übergangsmetall M und dem noch gebundenen C des im Formelbeispiel gezeigten Butadiendiyl-Dianions ist sodann der Ort fiir die Olefin-Insertion zur Polymerisation.

Weiterhin sind die erfindungsgemäß einzusetzenden π-Komplex-Verbindungen bzw. Metallocen-Verbindungen geeignet zur Herstellung sowohl thermoplastischer als auch elastomerer Polymerisate nach den verschiedenen, oben genannten Herstellungsverfahren, wobei sowohl hochkristalline Polymere mit optimiertem Schmelzbereich als auch amorphe Polymere mit optimierter Glastemperatur zugänglich sind.

### Beispiele

Alle Reaktionen wurden unter streng anaeroben Bedingungen und unter Verwendung von Schlenk-Techniken bzw. der Hochvakuumtechnik durchgeführt. Die verwendeten Lösungsmittel waren trocken und mit Argon gesättigt. Chemische Verschiebungen δ sind in ppm angegeben, relativ zum jeweiligen Standard: ¹H(Tetramethylsilan), ¹³C(Tetramethylsilan), ³¹P(85%ige H₃PO₄), ¹¹B(Bortrifluorid-Etherat δ = - 18.1 ppm). Negative Vorzeichen bedeuten eine Verschiebung zu höherem Feld.

### Beispiel 1 (Bis-(trimethylsilyl)-cyclopentadien, Verbindung 1)

14,7 g (0,106 mol) Trimethylsilyl-cyclopentadien (bezogen von Fa. Fluka) und 150 ml Tetrahydrofuran (THF) wurden in einen Reaktionskolben gegeben und auf 0°C abgekühlt. Hierzu wurden 47,4 ml einer Lösung von Butyl-lithium in n-Hexan (2,3 molar; Gesamtmenge 0,109 mol) tropfenweise während 20 Minuten zugefügt. Nach vollständiger Zugabe wurde die gelbe Lösung für eine weitere Stunde gerührt; danach wurde das Kältebad entfernt. Bei Raumtemperatur wurde die Lösung fiir eine weitere Stunde gerührt und danach auf -20°C abgekühlt. Dann wurden 14,8 ml (0,117 mol) Trimethylsilylchlorid tropfenweise während 10 Minuten zugegeben und das Reaktionsgemisch bei -10°C zwei Stunden gerührt. Danach wurde das Kältebad entfernt und die Reaktionslösung auf Raumtemperatur erwärmt und für eine weitere Stunde nachgerührt. Das Reaktionsgemisch wurde durch Celite filtriert; das Filter wurde mit Hexan gewaschen, und das Hexan wurde von den vereinigten Filtraten im Vakuum entfernt. Das Rohprodukt ergab bei einer Destillation bei 26°C unter 0,4 mbar 19 g reines Produkt der Verbindung 1 (85 % der theoretischen Ausbeute). Siedepunkt und NMR-Daten entsprechen den Literaturangaben (J. Organometallic Chem. 29 (1971), 227; ibid. 30 (1971), C 57; J. Amer. Chem. Soc, 102, (1980), 4429; J. Gen. Chem. USSR, Eng. Transl. 43 (1973), 1970; J. Chem. Soc., Dalton Trans. 1980, 1156) ¹H-NMR (400 MHz, C₆D₆): δ = 6,74 (m,2H), 6,43 (m,2H), -0,04 (s, 18H).

### Beispiel 2 (Trimethylsilyl-cyclopentadienyl-dichlorboran, Verbindung 2)

In einen Rundkolben, der mit einem Trockeneis-Kühlbad ausgerüstet war, wurden 16 g (0,076 mol) der Verbindung 1 gegeben. 8,9 g (0,076 mol) BCl₃ wurden bei -78°C in ein Schlenk-Rohr kondensiert und danach tropfenweise während einer Zeit von 5 Minuten in den Rundkolben gegeben. Die Reaktionsmischung wurde langsam während 1 Stunde auf Zimmertemperatur erwärmt und dann für weitere 2 Stunden auf 55 bis 60°C gehalten. Alle flüchtigen Verbindungen wurden im Vakuum (3 mm Hg = 4 mbar) entfernt. Die anschließende Destillation bei 39°C und 0,012 mbar ergab 14,1 g der Verbindung 2 (85 % der theoretischen Ausbeute). Das ¹H-NMR stimmt mit den Literaturangaben überein und zeigte, daß eine Reihe von Isomeren hergestellt worden waren (vgl. J. Organometallic Chem. 169 (1979), 327). ¹¹B-NMR (64,2 MHz, C₆D₆): δ = +31,5.

### Beispiel 3 (Dichlorboranyl-cyclopentadienyl-titantrichlorid, Verbindung 3)

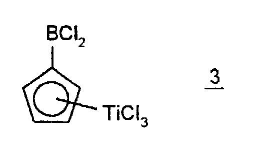

In ein 250 ml-Schlenk-Rohr wurden 11,4 g (0,052 mol) der Verbindung 2 und 100 ml Methylenchlorid (CH₂Cl₂) gegeben. Diese Lösung wurde auf -78°C gekühlt, und 9,8 g (5,6 ml, 0,052 mol) Titantetrachlorid wurden während 10 Minuten zugetropft. Die erhaltene rote Lösung wurde langsam auf Raumtemperatur erwärmt und während weiterer 3 Stunden gerührt. Das Lösungsmittel wurde im Vakuum entfernt, und man erhielt ein schmutzig-gelbes Produkt. 200 ml Hexan wurden zum rohen Feststoff gegeben, und die erhaltene gelbe Lösung wurde filtriert und über Nacht im Kühlschrank gekühlt, wobei 12,3 g (79 % der theoretischen Ausbeute) gelber Kristalle der Verbindung 3 erhalten wurden. Es sei darauf hingewiesen, daß in J. Organometallic Chem. 169 (1979), 373, 62 % der theoretischen Ausbeute erhalten wurde, wobei die Reaktion in einem Kohlenwasserstoff-Lösungsmittel, wie Petroleumether oder Methylcyclohexan ausgeführt wurde.
¹H-NMR (400 MHz, CD₂Cl₂): δ = 7,53 (t, J = 2,6 Hz, 2H), 7,22 (t, J = 2,6 Hz, 2H). ¹¹B-NMR (64,2 MHz, CD₂Cl₂): δ = +33.

### Beispiel 4 (Dimethylboranyl-cyclopentadienyl-titantrichlorid, Verbindung 4)

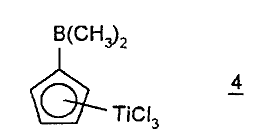

In einem Rundkolben wurden 2,37 g (0,0079 mol) der Verbindung 3 in 100 ml Hexan gelöst. Diese Lösung wurde auf 0°C gekühlt und tropfenweise mit 4 ml einer 2-molaren Lösung von Aluminiumtrimethyl in Toluol (0,08 mol) versetzt. Nach vollständiger Zugabe wurde das Kältebad entfernt und alle flüchtigen Anteile im Vakuum entfernt. Der verbleibende gelbe Feststoff wurde nunmehr in Pentan aufgelöst, feste Anteile wurden abfiltriert, und das klare Filtrat wurde auf -78°C abgekühlt, wobei 1,5 g (74 % der theoretischen Ausbeute) an Verbindung 4 erhalten wurden. Es sei angemerkt, daß in J. Organometallic Chem. 169 (1979), 373 eine Ausbeute von 87 % der theoretischen Ausbeuten angegeben werden, wobei Tetramethylzinn als Alkylierungsmittel verwendet wurde; es war jedoch nicht möglich, die Verbindung 4 frei vom entstehenden Trimethylzinnchlorid zu erhalten.
¹H-NMR (400 MHz, CD₂Cl₂): δ = 7,48 (t, J = 2,5 Hz, 2H), 7,23 (t, J = 2,5 Hz, 2H), 1,17 (s, 6H). ¹¹B-NMR (64,2 MHz, CD₂Cl₂): δ = +56.

### Beispiel 5 (Pyrrol-lithium, Verbindung 5)

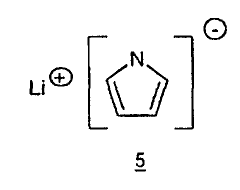

59 ml einer Lösung von Butyl-lithium (2,5 molar in Hexan, 0,148 mol) wurden langsam bei -20°C zu einer Lösung von 9,9 g Pyrrol (0,148 mol) in 200 ml Hexan gegeben, wobei sich ein weißer Festkörper bildete. Es wurde 2 Stunden bei Zimmertemperatur nachgerührt und der Festkörper durch Filtration gewonnen, 2 mal mit je 20 ml Hexan gewaschen und im Vakuum getrocknet. Dies Verfahren ergab 6 g der Verbindung 5 (56 % der theoretischen Ausbeute).
¹H-NMR (400 MHz, THF): δ = 6,71 (s, 2H), 5,95 (s, 2H).

### Beispiel 6 (Dimethylboranyl-verbrücktes Cyclopentadienyl-pyrrol-titandichlorid, Verbindung 6)

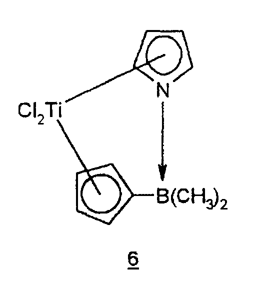

Eine Lösung von 1,34 g (0,005 mol) der Verbindung 4 in 20 ml Toluol wurde während 5 Minuten bei -78°C zu 0,38 g (0,005 mol) der Verbindung 5 gegeben. Das Kältebad wurde danach entfernt, und es wurde 2 Stunden bei Raumtemperatur weitergerührt. Danach wurde der gebildete rote Festkörper abfiltriert; das gelbe Filtrat wurde verworfen. Der rote Festkörper wurde mit Toluol gewaschen und im Vakuum getrocknet. Man erhielt 1,14 g mit einem geringen Anteil an LiCl.
¹H-NMR (400 MHz, THF): δ = 6.89 (pseudo-t, J = 2,3 Hz, 2 H), 6,64 (m, 2 H), 6,59 (pseudo-t, J = 2.35 Hz, 2 H), 5,73 (pseudo-t, J = 1,7 Hz, 2 H), 0,06 (s, 6 H). ¹¹B NMR (80 MHz, THF): δ = -26 ppm.

### Beispiel 7 (Ethylen-Propylen-Copolymerisation)

In einem im Vakuum bei 100°C ausgeheizten, trockenen, sauerstofffreien, gerührten V4A-Stahlautoklaven wurden 10 g Propen einkondensiert, 100 ml trockenes Toluol eingefüllt, auf 60°C erhitzt, der erreichte Druck (5,5 bar) mit Ethen um 2 bar (auf 7,5 bar) erhöht und der Katalysator mittels einer Druckschleuse zugegeben. Der D/A-Metallocen-Katalysator (Verbindung 6) war zuvor in Toluol bei Raumtemperatur mit MAO (Methylaluminoxan, 10 %ig in Toluol, Molmasse 900 g/mol) im Atom(Mol)-Verhältnis Al/Ti = 5.000 : 1 während 15 Minuten präformiert worden. Die eingesetzte Katalysatormenge enthielt 1 x 10⁻⁶ mol Ti und 5 x 10⁻³ mol Al. Unter Rühren wurde 30 Minuten bei 60 bis 65°C (exotherm) polymerisiert. Nach Entspannen des Autoklaven wurde die hochviskose Reaktionsmischung in eine Mischung von 500 ml Ethanol und 50 ml konzentrierter wäßriger Salzsäure (37 %ig) eingerührt. Die Suspension des hierbei ausgefallenen weißen Polymers wurde noch 17 Stunden gerührt, anschließend der Feststoff durch Filtration isoliert, mit Ethanol gründlich gewaschen und bis zur Gewichtskonstanz bei 100°C getrocknet. Die EPM-Ausbeute betrug 0,5 g, was einer Katalysator-Aktivität von 1 Tonne Copolymer pro Mol Titan und Stunde entspricht. IR-spektroskopisch wurde ein Propylengehalt von 25 Gew.-% ermittelt. Die Grenzviskosität η, gemessen in o-Dichlorbenzol bei 140°C, betrug 1,02 dl/g. Die DSC-Messung ergab eine Glasübergangs-Temperatur Tg = -44°C und eine Einfriertemperatur von -53°C. Die GPC-Messung ergab ein Gewichtsmittel M_{w} von 119 kg/mol, M_{w}/Mₙ = 2.62.

### Beispiel 8 (1-Phenyl-2,3,4,5-tetramethyl-phosphol, Verbindung 7)

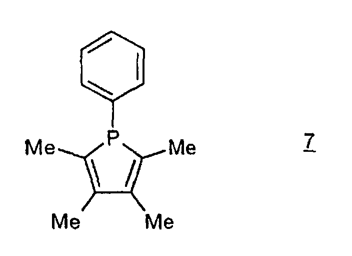

In Anlehnung an Organometallics 7 (1988), 921 wurde eine Lösung von 11,7 g (0,216 mol) 2-Butin in 150 ml CH₂Cl₂ langsam zu 15,3 g (0,115 mol) AlCl₃ in CH₂Cl₂ gegeben (0°C; 30 Min.). Es wurde 45 Minuten bei 0°C nachgerührt, dann das Kältebad entfernt und eine weitere Stunde nachgerührt. Danach wurde die Lösung auf -50°C gekühlt und eine Lösung von 21,4 g (0,12 mol) Phenyl-dichlorphosphin in CH₂Cl₂ während 20 Minuten zugegeben. Das Kältebad wurde danach entfernt, die dunkelrote Lösung eine Stunde nachgerührt und dann bei -30°C zu einer Lösung von 27 g (0,13 mol) Tributylphosphin in 100 ml CH₂Cl₂ gegeben. Die rote Farbe verschwand sofort; es hinterblieb eine gelbe Lösung. Nachdem die Zugabe beendet war, wurde das Lösungsmittel im Vakuum entfernt; es blieb ein dickes gelbes Öl. Das Öl wurde in Hexan aufgenommen und unter Ar-Atmosphäre mit gesättigter wäßriger NaHCO₃-Lösung und H₂O gewaschen. Nach Trocknung über MgSO₄ wurde das Hexan im Vakuum entfernt. Es hinterblieben 18,2 g als klares Öl (Ausbeute 78 %). ¹H-NMR (400 MHz, CDCl₃) δ: 7,3 (m, 5H), 2,0 (m, 12H), ³¹P-NMR (161,9 MHz, CDCl₃) δ: 16,8 ppm.

### Beispiel 9 (Lithium-2,3,4,5-tetramethyl-phosphol, Verbindung 8)

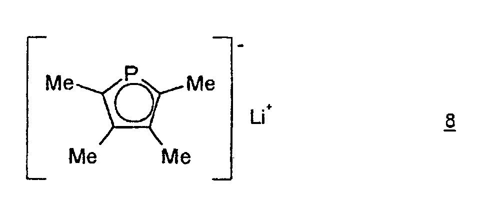

In Anlehnung an Organometallics 7 (1988), 921 wurden 0,52 g (0,074 mol) Lithium zu einer Lösung von 7 g (0,032 mol) der Verbindung 7 in 150 ml Tetrahydrofuran (THF) gegeben und über Nacht gerührt. Die erhaltene rote Lösung wurde zur Entfernung restlicher Feststoffe durch eine Fritte filtriert und das Filtrat auf 0°C gekühlt. Danach wurde eine Lösung von 1,45 g (0,01 mol) AlCl₃ in 20 ml THF zugetropft und die Lösung auf Raumtemperatur gebracht. Eine aliquote Menge wurde zur Analyse entnommen und die restliche Lösung direkt zur Herstellung der Verbindung 9 benutzt. ³¹P-NMR (161,9 MHz, THF) δ: 63,7 ppm.

### Beispiel 10 (Dimethylboranyl-cyclopentadienyl-tetramethylphospholyl-titandichlorid, Verbindung 9)

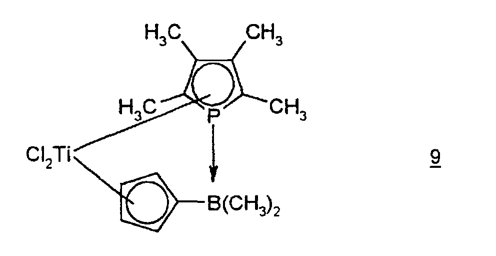

Die THF-Lösung aus Beispiel 9 mit 1,46 g (0,01 mol) der Verbindung 8 wurde in einen Rundkolben gegeben; THF wurde im Vakuum entfernt. Nach Zugabe von Toluol und Abkühlung auf -78°C wurde eine Lösung von 2,6 g (0,01 mol) der Verbindung 4 in 20 ml Toluol langsam unter Rühren zugegeben, wobei eine rote Aufschlämmung entstand. Nachdem die Zugabe beendet war, wurde die Aufschlämmung auf Raumtemperatur gebracht und 1 Stunde nachgerührt. Nach Abfiltrieren von ungelöst gebliebenem Feststoff wurde das Toluol im Vakuum entfernt; zum zurückgebliebenen öligen Feststoff wurde Hexan gegeben. Die Hexan-Lösung wurde ebenfalls von ungelöst gebliebenem Feststoff abfiltriert und über Nacht bei -20°C aufbewahrt. Nach Abdekantieren des Hexans wurden 0,5 g eines grünen Feststoffs erhalten, der als Verbindung 9 identifiziert wurde (Ausbeute 14 %). ¹H-NMR (200 MHz, CD₂Cl₂): δ = 6,64 (m,2H), 6,57 (m,2H), 2,11 (d, J_{H-P} = 10 Hz, 6H), 2,09 (s,6H), 0,87 (d, J_{H-P} = 5,3 Hz, 6H). ³¹P-NMR (161,9 MHz, THF): δ = 95,6 ppm, ¹¹B-NMR (80 MHz, CD₂Cl₂): δ = 39 (br, m) ppm.

Die Donor-Akzeptor-Bindungslänge d(P→B) in [(Me₄phospholyl)BMe₂(cp)TiCl₂] = obige Verbindung 9 wurde mittels Röntgenstrukturanalyse zu 2,11 Å bestimmt (Fig. 1).

### Beispiel 11 (Polystyrol)

In einen ausgeheizten und mit Argon gespülten 250 ml Vierhalskolben mit Thermometer und Argonanschluß wurden 78,15 g (89,8 ml) Toluol (über Natrium destilliert) vorgelegt. Danach wurden 0,5 mol (52,07 g) Styrol (über Calciumhydrid destilliert) zugegeben. Die Polymerisation wurde durch Zugabe der Katalysator-Komponenten 10 mmol (6,6 ml) MAO 10%ig in Toluol und 10 µmol [(Me₄phospholyl) BMe₂(cp)TiCl₂].
≙ 3.62 mg in 4,5 ml Toluol gestartet.
Polymerisationszeit: 1 h 25°C und 1 h 50°C

Die gebildete Suspension wurde in 1 l CH₃OH/HCl (90/10) ausgefällt, abfiltriert und anschließend 2 h mit 1 l CH₃OH ausgerührt, filtriert und bei 90°C im Vakuumtrockenschrank getrocknet.

Die Grenzviskosität bei 140°C in ortho-Dichlorbenzol betrug 0.43 dl/g.
Die DSC-Messung in der 2. Aufheizung ergab zwei Schmelzmaxima
Tₘ₁ = 262°C und Tₘ₂ = 268°C (Hauptpeak).
Die NMR-Untersuchung zeigte ein syndiotaktisches Polystyrol.

### Beispiel 12 (Polybutadien)

In einem ausgeheizten und mit Argon gespülten 250 ml Vierhalskolben mit Thermometer, Trockeneiskühler und Argonanschluß wurden 81,5 g (93,67 ml) Toluol über Natrium destilliert vorgelegt und 1 mol (54,1 g) 1,3-Butadien einkondensiert.

Die Polymerisation wurde durch Zugabe der Katalysator-Komponenten gestartet:
10 mmol MAO = 6,6 ml 10 %ig in Toluol
10 µmol [(Me₂phospholyl)BMe₂(cp)TiCl₂] ≙ 3,34 mg in 6 ml Toluol
Polymerisationszeit: 1 h bei 18°C und 1 h bei 25°C (Heizbad 50°C)

Die viskose Lösung wird in 11 Ethanol ausgefällt, filtriert und anschließend 2 h mit 11 Ethanol ausgerührt, filtriert und im Vakuumschrank bei 90°C getrocknet.
Ausbeute: 5,3 g hochmolekulares Polybutadien

| | | |
|---|---|---|
| Die Mikrostruktur nach FT-IR | 1,4-cis | 85 % |
| | 1,4-trans | 1,5 % |
| | 1,2-Vinyl | 13,5 % |

### Beispiel 13 (Polystyrol)

Es wurde wie in Beispiel 11 verfahren, wobei anstelle des Phospholyl-Katalysators hier der Pyrrolyl-Katalysator aus Beispiel 6 [(pyrro lyl)BMe₂(cyclopentadienyl)TiCl₂] eingesetzt wurde. Es bildete sich hochsyndiotaktisches Polystyrol. Die Grenzviskosität in ortho-Dichlorbenzol bei 140°C betruf 0,54 dl/g. Die DSC-Messung ergab in der 2. Aufheizung Tm₁ = 264°C und Tm₂ = 270°C (Hauptpeak).

## Patentansprüche

1. π-Komplex-Verbindungen und insbesondere Metallocen-Verbindungen der Formel 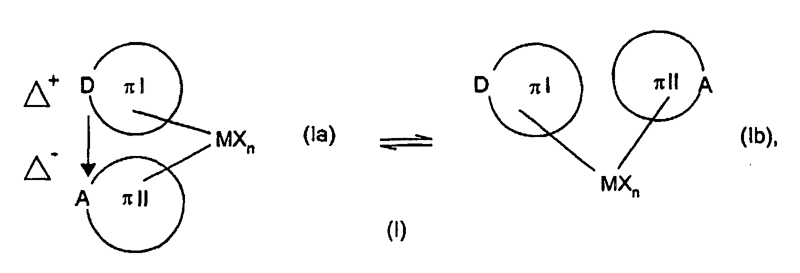 in der
πI und πII voneinander verschiedene geladene oder elektrisch neutrale π-Systeme darstellen, die ein- oder zweifach mit ungesättigten oder gesättigten Fünf- oder Sechsringen kondensiert sein können, und ausgewählt werden aus substituiertes und nicht substituiertes Ethylen, Allyl, Pentadienyl, Benzyl, Butadien, Benzol, das Cyclopentadienylanion und die sich durch Ersatz mindestens eines C-Atoms durch ein Heteroatom ergebenden Spezies,
D ein Donoratom bedeutet, das Substituent von πI oder Teil des π-Systems von πI ist und das in seinem jeweiligen Bindungszustand mindestens über ein freies Elektronenpaar verfügt,
A ein Akzeptoratom bedeutet, das Substituent von πII oder Teil des π-Systems von πII ist und das in seinem jeweiligen Bindungszustand eine Elektronenpaar-Lücke aufweist,
wobei D und A durch eine reversible koordinative Bindung derart verknüpft sind, dass die Donorgruppe eine positive (Teil)Ladung und die Akzeptorgruppe eine negative (Teil)Ladung annehmen und wobei mindestens eines von D und A Teil des jeweils zugehörigen π-Systems ist,
wobei D und A ihrerseits Substituenten tragen können,
wobei jedes π-System bzw. jedes ankondensierte Ringsystem eines oder mehrere D oder A oder D und A enthalten kann und
wobei in πI und πII in der nicht kondensierten oder in der kondensierten Form unabhängig voneinander eines bis alle H-Atome des π-Systems durch gleiche oder verschiedene Reste aus der Gruppe von linearem oder verzweigtem C₁-C₂₀-Alkyl, das 1-fach bis vollständig durch Halogen, 1- bis 3-fach durch Phenyl sowie 1- bis 3-fach durch Vinyl substituiert sein kann, C₆-C₁₂-Aryl, Halogenaryl mit 6 bis 12 C-Atomen, sowie ein- oder zweifach durch D und A substituiert sein können, sodaß die reversible koordinative D→A-Bindung (i) zwischen D und A, die beide Teile des jeweiligen π-Systems sind, oder (ii) von denen D oder A Teil des π-Systems und das jeweils andere Substituent des nicht kondensierten π-Systems oder des ankondensierten Ringsystems ist oder (iii) sowohl D als auch A solche Substituenten sind, wobei im Falle von (iii) mindestens ein zusätzliches D oder A oder beide Teile des π-Systems oder des ankondensierten Ringsystems ist (sind), ausgebildet wird,
M für ein Übergangsmetall der III., IV., V. oder VI. Nebengruppe des Periodensystems der Elemente (Mendelejew) einschließlich der Lanthaniden und Actiniden steht,
X ein Anionäquivalent bedeutet und
n in Abhängigkeit von den Ladungen von M sowie denen von πI und πII die Zahl Null, Eins, Zwei, Drei oder Vier bedeutet.

2. Verwendung von π-Komplex-Verbindungen nach Anspruch 1 in einem Verfahren zur Homo- oder Copolymerisation eines oder mehrerer Olefine, i-Olefine, Alkine oder Diolefine als Monomere oder zur ringöffnenden Polyaddition in der Gas-, Lösungs-, Masse-, Hochdruck- oder Slurry-Phase bei -60 bis +250°C und 0,5 bis 5.000 bar und in Gegenwart oder Abwesenheit von gesättigten oder aromatischen Kohlenwasserstoffen oder von gesättigten oder aromatischen Halogenkohlenwasserstoffen, wobei diese π-Komplex-Verbindungen als Katalysatoren in einer Menge von 10¹ bis 10¹² mol Monomere pro mol π-Komplex eingesetzt werden.

3. π-Komplex-Verbindungen nach Anspruch 1, **dadurch gekennzeichnet, daß** das π-System πI ein Cyclopentadienylgerüst aus der Gruppe von Cyclopentadien, substituiertem Cyclopentadien, Inden, substituiertem Inden, Fluoren und substituiertem Fluoren ist, in welchem ankondensierte aromatische Ringe teilweise oder vollständig hydriert sein können.

4. π-Komplex-Verbindungen nach Anspruch 1, **dadurch gekennzeichnet, daß** als Donoratome D Elemente aus der Gruppe N, P, As, Sb, Bi, O, S, Se, Te, F, Cl, Br, I, bevorzugt N, P, O, S, eingesetzt werden.

5. π-Komplex-Verbindungen nach Anspruch 1, **dadurch gekennzeichnet, daß** als Akzeptoratome A Elemente aus der Gruppe B, Al, Ga, In, Tl, bevorzugt B, Al, Ga eingesetzt werden.

6. π-Komplex-Verbindungen nach Anspruch 1, **dadurch gekennzeichnet, daß** Donor-Akzeptor-Brücken aus der Gruppe von N→B, N→Al, P→B, P→Al, O→B, O→Al, Cl→B, Cl→Al, C=O→B, C=O→Al eingesetzt werden.

7. π-Komplex-Verbindungen nach Anspruch 1, **dadurch gekennzeichnet, daß** M für Sc, Y, La, Sm, Nd, Lu, Ti, Zr, Hf, Th, V, Nb, Ta, Cr, bevorzugt Ti, Zr, Hf, V, Nb oder Ta steht.

8. π-Komplex-Verbindungen nach Anspruch 1, **dadurch gekennzeichnet, daß** eines der Atome D bzw. A Teil des Ringes des zugehörigen π-Systems ist, bevorzugt daß D Teil des Ringes des zugehörigen π-Systems ist.

9. Verwendung nach Anspruch 2, **dadurch gekennzeichnet, daß** die π-Komplex-Verbindungen gemeinsam mit einem Aluminoxan oder einem anderen ionisierenden Agens als Katalysatorsystem eingesetzt werden.

10. Reaktionsprodukte ionisierender Agentien mit π-Komplexen der Formel (I) nach Anspruch 1 der Formel (XI) 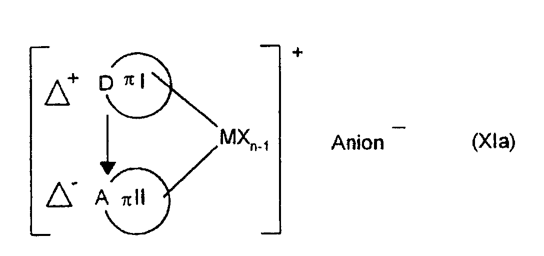 bzw. 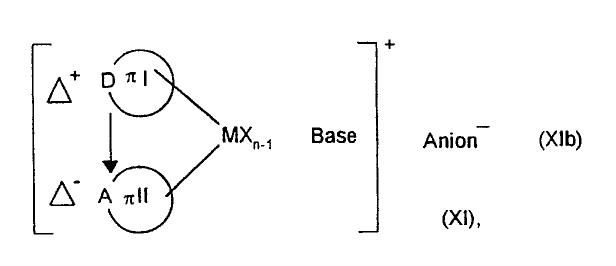 in der
Anion für das gesamte sperrige, schlecht koordinierende Anion und Base für eine Lewis-Base stehen.

11. Umlagerungsprodukte von π-Komplex-Verbindungen nach Anspruch 1 unter Selbstaktivierung, bei denen nach Öffnung der D/A-Bindung das Akzeptoratom A einen X-Liganden unter Ausbildung einer zwitterionischen π-Komplex-Struktur bindet, wobei beim Übergangsmetall M eine positive Ladung und beim Akzeptoratom A eine negative Ladung erzeugt wird und wobei ein weiterer X-Ligand H oder substituiertes oder nicht substituiertes C darstellt, in dessen Bindung zum Übergangsmetall M die Olefin-Insertion zur Polymerisation erfolgt, wobei bevorzugt 2 X-Liganden zu einem Chelat-Liganden verknüpft sind.

12. Verwendung nach Anspruch 2 zur Herstellung von hochsyndiotaktischen Polystyrolen.

13. Verwendung nach Anspruch 2 zur Herstellung von reinen Poly-(1,3-dienen), bevorzugt solchen mit einer hohen 1,3-cis-Verknüpfung.

## Claims

1. π complex compounds, and particularly metallocene compounds, of formula 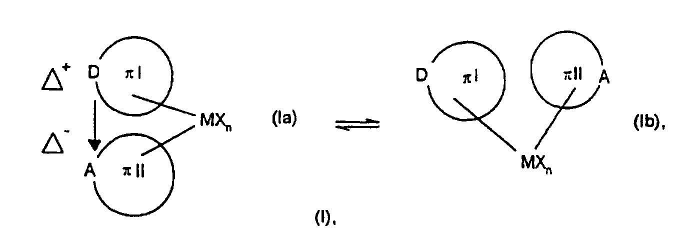 wherein
πI and πII represent π systems which bear charges which are different from each other or which are electrically neutral, and which can be singly- or doubly-condensed with unsaturated or saturated five- or six-membered rings, and which are selected from substituted and unsubstituted ethylene, allyl, pentadienyl, benzyl, butadiene, benzene, a cyclopentadienyl anion, and species which are formed by the replacement of at least one C atom by a hetero atom,
D denotes a donor atom which is a substituent of πI or is part of the π system of πI, and which has at least one free electron pair available in its respective bonding state,
A denotes an acceptor atom which is a substituent of πII or is part of the π system of πII, and which has an electron pair vacancy in its respective bonding state,
wherein D and A are linked by a reversible coordinate bond in such a way that the donor group assumes a positive (partial) charge and the acceptor group assumes a negative (partial) charge, and wherein at least one of D and A is part of the associated π system in each case,
wherein D and A themselves may comprise substituents,
wherein each π system or each condensed-on ring system can contain one or more D or A entities, or D and A entities, and
wherein in πI and πII, in the non-condensed or in the condensed form, one to all of the H atoms of the π system, independently of each other, can be substituted by identical or different radicals from the group comprising a linear or branched C₁-C₂₀ alkyl which can be substituted singly to completely by halogens, can be substituted singly to three-fold by phenyl or can be substituted singly to three-fold by vinyl; a C₆-C₁₂ aryl, and a halogenoaryl comprising 6 to 12 C atoms; and said H atoms can also be singly- or doubly-substituted by D and A, so that the reversible coordinate D→A bond is formed (i) between D and A, which both constitute parts of the respective π system, or (ii) from the D or A part of the π system and the other substituent of the non-condensed π system or of the condensed-on ring system in each case, or (iii) both D and A are such substituents, wherein in the case of (iii) at least one additional D or A entity or both is (are) part of the π system or of the condensed-on ring system,
M represents a transition metal of subgroups III, IV, V or VI of the periodic table of the elements (Mendeleev), including the lanthanides and actinides,
X denotes an anion equivalent, and
n denotes the numbers zero, one, two, three or four depending on the charge of M and on those of πI and πII.

2. The use of π-complex compounds according to claim 1 in a method for the homo- or copolymerisation of one or more olefines, i-olefines, alkynes or diolefines as monomers, or for ring-opening addition polymerisation in a gaseous, solution, bulk, high-pressure or slurry phase at -60 to +250°C and at 0.5 to 5000 bar and in the presence or absence of saturated or aromatic hydrocarbons or of saturated or aromatic halogenated hydrocarbons, wherein said π-complex compounds are used as catalysts in an amount of 10¹ to 10¹² mol of monomers per mol of π-complex.

3. π-complex compounds according to claim 1, **characterised in that** the πI π system is a cyclopentadienyl skeleton from the group comprising cyclopentadiene, substituted cyclopentadiene, indene, substituted indene, fluorene and substituted fluorene, in which condensed-on aromatic rings can be partially or completely hydrogenated.

4. π-complex compounds according to claim 1, **characterised in that** elements from the group comprising N, P, As, Sb, Bi, O, S, Se, Te, F, Cl, Br, I, preferably N, P, O or S, are used as donor atoms D.

5. π-complex compounds according to claim 1, **characterised in that** elements from the group comprising B, Al, Ga In, Tl, preferably B, Al or Ga, are used as acceptor atoms A.

6. π-complex compounds according to claim 1, **characterised in that** donor-acceptor bridges are used from the group comprising N→B, N→Al, P→B, P→Al, O→B, O→Al, Cl→B, Cl→Al, C=O→B, C=O→Al.

7. π-complex compounds according to claim 1, **characterised in that** M represents Sc, Y, La, Sm, Nd, Lu, Ti, Zr, Hf, Th, V, Nb, Ta or Cr, preferably Ti, Zr, Hf, V, Nb or Ta.

8. π-complex compounds according to claim 1, **characterised in that** one of the atoms D or A is part of the ring of the associated π system, and preferably that D is part of the ring of the associated π system.

9. A use according to claim 2, **characterised in that** the π-complex compounds are used together with an aluminoxane or with another ionising agent as a catalyst system.

10. Reaction products of ionising agents with π-complexes of formula (I) according to claim 1, which reaction products correspond to formula (XI) 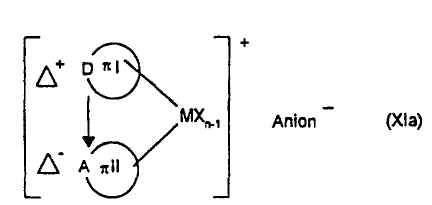 or 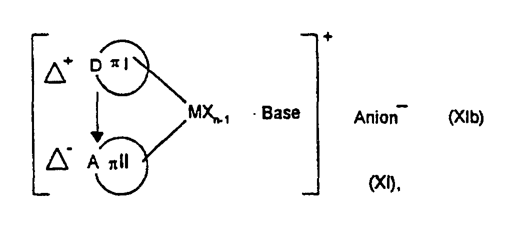 wherein
Anion represents the entire, bulky, poorly coordinating anion and Base represents a Lewis base.

11. Rearrangement products formed by self-activation of π-complex compounds according to claim 1, wherein after the opening of the D/A bond the acceptor atom A binds an X ligand with the formation of a zwitterionic π-complex structure, wherein a positive charge is produced on the transition metal M and a negative charge is produced on the acceptor atom A, and wherein a further X ligand represents H or substituted or unsubstituted C, in the bond of which to the transition metal M an olefine is inserted for polymerisation, wherein 2 X ligands are preferably linked to one chelate ligand.

12. A use according to claim 2 for the production of highly syndiotactic polystyrenes.

13. A use according to claim 2 for the production of pure poly-(1,3-dienes), preferably those with a high degree of 1,3-cis linking.

## Revendications

1. Complexes π, et en particulier métallocènes de formule 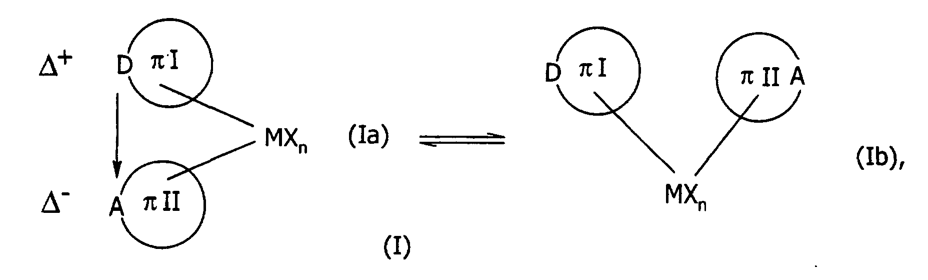 dans laquelle
πI et πII, identiques ou différents, représentent des systèmes π chargés ou électriquement neutres, qui peuvent être condensés une ou deux fois avec des cycles insaturés ou saturés à cinq chaînons ou six chaînons, et sont choisis parmi les suivants : éthylène substitué ou non, allyle, pentadiényle, benzyle, butadiène, benzène, l'anion cyclopentadiényle et les systèmes correspondants obtenus par remplacement d'au moins un atome de carbone par un hétéroatome,
D représente un atome donateur qui est substituant de πI ou partie du système π de πI et qui, dans son état particulier de liaison, dispose d'au moins une paire d'électrons libre,
A représente un atome accepteur qui est substituant de πII ou partie du système π de πII et qui, dans son état de liaison particulier, a une paire d'électrons manquante,
D et A étant reliés par une liaison de coordination réversible, de sorte que le groupe donateur prend une charge (partielle) positive et le groupe accepteur une charge (partielle) négative, au moins un des atomes D et A étant partie du système π correspondant particulier,
D et A pouvant eux-mêmes porter des substituants,
chaque système π et chaque système cyclique condensé pouvant contenir un ou plusieurs atomes D ou A ou D et A, et
dans πI et πII, à l'état non condensé ou à l'état condensé, un ou plusieurs des atomes d'hydrogène du système π, indépendamment les uns des autres, peuvent être remplacés par des radicaux identiques ou différents choisis parmi les radicaux alkyle à chaîne droite ou ramifiée en C₁ à C₂₀, eux-mêmes éventuellement substitués une fois à totalement par des halogènes, une à trois fois par des groupes phényle et une à trois fois par des groupes vinyle, les groupes aryle en C₆ à C₁₂, halogénoaryle en C₆ à C₁₂, et une ou deux fois par D et A, de sorte que la liaison de coordination réversible D→A est établie entre D et A (i) qui sont tous deux partie du système π correspondant, ou bien (ii) dont l'un est partie du système π et l'autre substituant du système π non condensé ou du système cyclique condensé, ou bien (iii) qui sont tous deux de tels substituants, auquel cas au moins un autre atome D ou A, ou les deux sont partie du système π ou du système cyclique non condensé,
M représente un métal de transition des sous-groupes III, IV, V ou VI de la Classification Périodique des éléments (Mendeleïev) y compris les lanthanides et les actinides,
X représente un équivalent d'un anion et
n selon les charges de M et celles de πI et πII, est égal à 0, 1, 2, 3 ou 4.

2. Utilisation des complexes π selon la revendication 1 dans un procédé pour l'homo- ou la co-polymérisation d'oléfines, isooléfines, alcynes ou dioléfines monomères, isolément ou en mélange entre eux, ou pour la polyaddition avec ouverture du cycle en phase gazeuse, en solution, en masse, sous haute pression ou en dispersion à des températures allant à -60 à +250°C et des pressions allant de 0,5 à 5 000 bars et en présence ou non d'hydrocarbures saturés ou aromatiques ou d'hydrocarbures halogénés saturés ou aromatiques, ces complexes π étant utilisés en tant que catalyseurs en quantité d'une mole pour 10¹ à 10¹² mol des monomères.

3. Complexes π selon la revendication 1, **caractérisés en ce que** le système π πI est un squelette cyclopentadiénylique du groupe du cyclopentadiène, des cyclopentadiènes substitués, de l'indène, des indènes substitués, du fluorène et des fluorènes substitués, dans lesquels les cycles aromatiques condensés peuvent être hydrogénés en totalité ou en partie.

4. Complexes π selon la revendication 1, **caractérisés en ce que** les atomes donateurs D sont des éléments du groupe consistant en N, P, As, Sb, Bi, O, S, Se, Te, F, Cl, Br, I, de préférence en N, P, O, S.

5. Complexes π selon la revendication 1, **caractérisés en ce que** les atomes accepteurs A sont des éléments du groupe consistant en B, Al, Ga, In, Tl, de préférence en B, Al, Ga ;

6. Complexes π selon la revendication 1, **caractérisés en ce que** les ponts donateur-accepteur sont choisis dans le groupe consistant en N→B, N→Al, P→B, P→Al, O→B, O→Al, Cl→B, Cl→Al, C=O→B, C=O→Al.

7. Complexes π selon la revendication 1, **caractérisés en ce que** M représente Sc, Y, La, Sm, Nd, Lu, Ti, Zr, Hf, Th, V, Nb, Ta, Cr, de préférence Ti, Zr, Hf, V, Nb ou Ta.

8. Complexes π selon la revendication 1, **caractérisés en ce que** l'un des atomes D et A est partie du cycle du système π correspondant, et de préférence D est partie du cycle du système correspondant.

9. Utilisation selon la revendication 2, **caractérisée en ce que** les complexes π sont utilisés en combinaison avec un aluminoxane ou un autre agent ionisant, pour formation d'un système catalyseur.

10. Produits de réaction d'agents ionisants et des complexes π de formule I selon la revendication 1, qui répondent à la formule XI 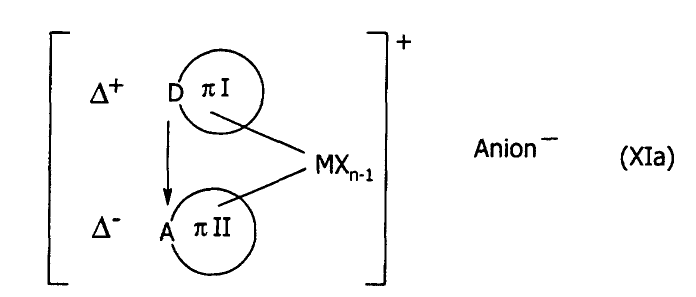 ou respectivement 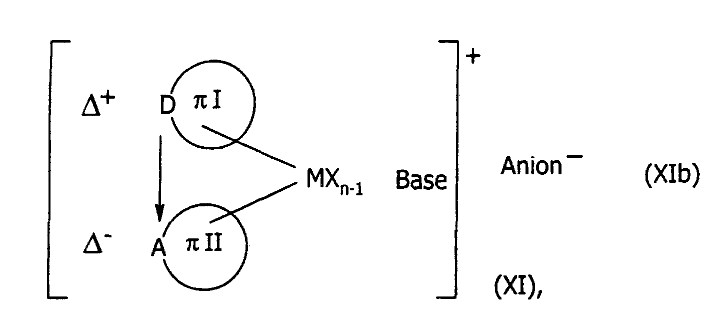 dans laquelle
Anion représente l'anion global volumineux, mal coordinant, et Base représente une base de Lewis.

11. Produits de transposition des complexes π selon la revendication 1 par auto-activation, dans lesquels, après ouverture de la liaison D/A, l'atome accepteur A fixe un ligand X avec formation d'un complexe π à structure hybride, le métal de transition M prenant une charge positive et l'atome accepteur A une charge négative, un autre un ligand X consistant en H ou en C substitué ou non, dont la liaison au métal de transition M constitue le site d'insertion des oléfines pour la polymérisation, deux ligands X étant de préférence reliés entre eux sous forme d'un ligand complexe.

12. Utilisation selon la revendication 2 pour la préparation de polystyrènes à haute syndiotacticité.

13. Utilisation selon la revendication 2 pour la préparation de poly-(1,3-diènes) purs, de préférence à forte proportion de liaisons 1,3-cis.
